# EUROPEAN PATENT APPLICATION

(11) **EP 1 284 464 A1**
(43) Date of publication of application: **19.02.2003**
(21) Application number: 01904401.5
(22) Date of filing: 13.02.2001
(51) Int. Cl.: G06F 17/60, B65G 1/137

(54) **TRANSACTION SUPPORTING FACILITY AND TRANSACTION SUPPORTING METHOD**

(30) Priority: 03.04.2000 JP 2000101610; 12.04.2000 JP 2000111332
(71) Applicant: Dojo, Makoto, Omihachiman-shi, Shiga 523-0806 (JP)
(72) Inventor: DOJO, Makoto, Minato-ku, Tokyo 108-0022 (JP); DOJO, Kenshin, Omihachiman-shi Shiga 523-0894 (JP); TSUJIOKA, Hayato, Hikone-shi Shiga 522-0008 (JP); KANEKO, Masato, Yokohama-shi Kanagawa 222-0001 (JP)
(74) Representative: Jenkins, Peter David
(86) International application number: JP0100988
(87) International publication number: WO01075721

(57) **Abstract**

A transaction supporting facility enabling both a consumer and a provider to perform a transaction at the prices that both desire by removing the drawback of conventional auction systems, that is, the difficulty and scarcity of making a transaction, wherein when providers X and consumers Y want to make transactions, if the offer price presented by a provider X is higher than the purchase price presented by a consumer Y, the transaction is conducted without adjusting the presented prices, the provider X can sell a commodity at the offer price, the consumer Y can purchase the commodity at the purchase price, and the difference between the prices can be managed and dealt with by the system side.

## Description

### Technical Field

The present invention relates to a transaction supporting facility and method, information processing device and matching supporting facility and method which are used to support, via a computer system, commercial transactions that are conducted between a plurality of providers who provide goods or services and a plurality of consumers who receive these goods or services.

### Background Art

Recently, with the development of communications systems and computers as represented by the Internet, systems that might be referred to as cyber-auction systems or cyber competitive selling (buying) systems, which utilize the information properties and real-time properties of the Internet, have received attention. In addition to ordinary auction systems in which a plurality of buyers utilize the Internet to offer purchase prices for a single good or service, and the buyer who offers the highest price can purchase the good or service, and reverse auction systems in which a plurality of sellers conversely use the Internet to offer selling prices for those desiring to buy a single good or service, and the seller who offers the lowest price can sell the good or service, various variations of such systems, such as bidding type systems which are devised so that the price information presented by others cannot be seen, etc., are conceivable as such systems.

However, as only natural from the standpoint of conventional commercial practices, all of these systems are alike in that a transaction can only be completed after the respective prices offered by the seller and buyer agree (there may be some cases in which a brokering fee is subtracted).

In the case of such systems, however, in a single competitive selling (buying) transaction, buying and selling can be completed by only one combination of buyer and seller for a single good or service. Accordingly, the probability of a transaction being completed is extremely low, and in most cases, time and trouble are required in order to complete a transaction; e.g., buyers or sellers who were unable to bid successfully must search for another auction, etc., and re-enter this auction. Furthermore, such systems tend to lapse into excessive competition, so that sound commercial transactions cannot be maintained; moreover, in cases where (as in auctions) the initial price offered by buyers is driven upward until there is finally a successful bid, after which another good of the same type is again put up for auction and is successfully bought by another buyer at a lower price, the first buyer may have lingering feelings of dissatisfaction and unfairness.

Accordingly, it might be thought that the above-described problems could easily be solved by causing buying and selling transactions to be completed among a plurality of combinations of buyers and sellers in a single auction. However, in order to complete transactions by causing the prices offered by buyers and sellers to agree, it must be possible to alter the prices offered by the respective sellers or respective buyers, and in such cases, it is extremely difficult to establish a rule for determining the standards by which these prices can be matched in a manner that leaves no dissatisfaction in either the buyer or the seller.

### Disclosure of the Invention

Accordingly, the main object of the present invention is to provide a completely novel invention which overturns the common-sense view of conventional transactions that holds that a transaction can only be completed when the respective prices offered by the buyer and seller agree, and which is devised so that a plurality of transactions can be completed in a single matching step by matching providers and consumers even though the prices offered by the providers and consumers disagree, thus solving the above-described conventional problems, allowing quick and appropriate commercial transactions to be completed, and affording an extremely high probability of transaction completion, so that this invention contributes widely to commercial transactions as a whole.

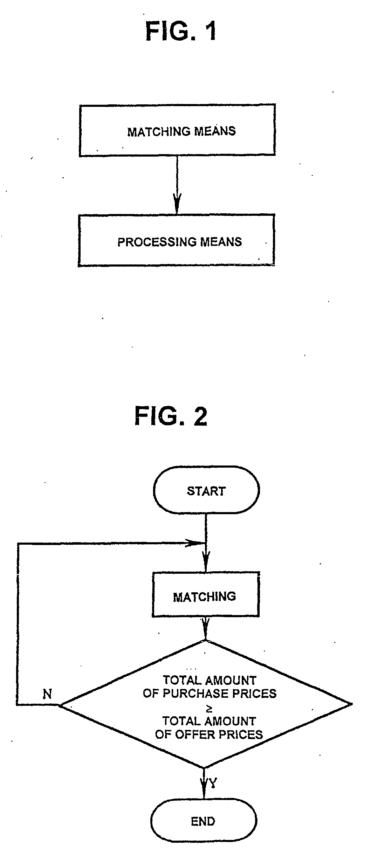

Specifically, as shown in Figure 1, the present invention is used to support transactions between providers who desire to provide respective goods or services and consumers who desire to purchase these goods or services; this invention comprises a matching means which matches providers offering offer prices for respective goods or services and consumers offering purchase prices for these goods or services even in cases where these offer prices and purchase prices disagree, and a processing means which is used to complete transactions between the matched consumers and providers at prices that satisfy the pricing conditions offered by these consumers and providers.

Here, the term "offer price" naturally includes prices that have no leeway, such as "100 yen" or "1000 yen", etc., but also includes prices that have some leeway, such as "100 yen to 200 yen". The same is true of the above-described "purchase price". Furthermore, the term "price that satisfies the offered pricing conditions" includes prices that are the same as or higher than shown offer prices, and prices that are the same as or lower than offered purchase prices. The term "processing used to complete a transaction" includes processing used to complete a transaction itself in addition to notification that matching has been accomplished and brokering of a settlement; this term refers to all or part of various types of processing that lead to the completion of a transaction.

In such a system, matching is performed regardless of the agreement or disagreement of offer prices and purchase prices. Accordingly, a plurality of transactions can easily be completed by a simple procedure in a single matching operation., so that the difficulty and rarity of completion of transactions that are the drawbacks of a conventional cyber-auction system, etc., can be overcome; furthermore, rapid completion of transactions can be guaranteed. Moreover, excessive competition in regard to prices tends not to occur, so that sound commercial transactions are more easily maintained. In addition, since buying and selling information regarding goods and services can be concentrated in one place, this information can be analyzed and used effectively in order to ascertain business trends, etc.

Furthermore, since the system is devised so that transactions are completed at prices that satisfy the conditions of the offer prices and purchase prices that are received, both the consumers and the providers can complete transactions at the prices that they themselves initially desired; accordingly, residual feelings of dissatisfaction and unfairness that arise in the case of the above-described conventional auctions, etc., can be eliminated. Moreover, the benefit of simplification of the procedure that leads to the completion of transactions is also obtained.

Considered from the standpoint of managing the operation, it is desirable that the matching means be a means that matches providers and consumers so that the difference obtained by subtracting the total amount of the offer price from the total amount of the purchase price for one or a plurality of goods or services is zero or a positive number. Furthermore, one example of the flow of this system is shown in Figure 2.

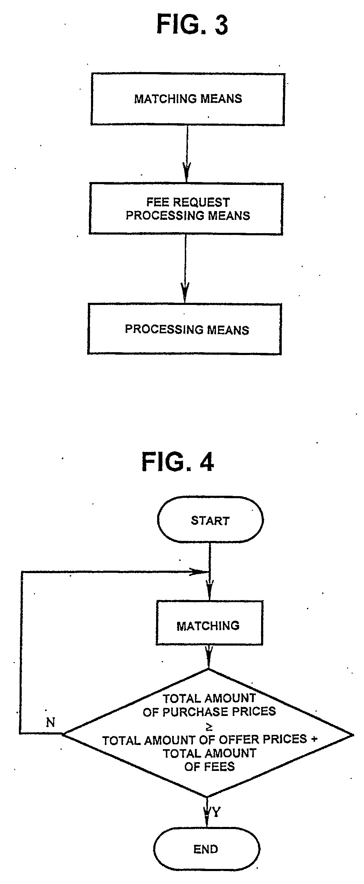

For similar reasons, the system is equipped with a fee request processing means that performs processing used to request a fee from the provider or consumer who has thus been matched, or from both the provider and the consumer. The matching means may also be a means that matches providers and consumers so that the difference obtained by subtracting the total amount of the offer price and the above-described fee from the total amount of the purchase price for one or a plurality of goods and services is zero or a positive number. Furthermore, an example of construction and an example of the flow of this system are shown in Figures 3 and 4.

In order to eliminate excessive competition and unfair competition, so that a contribution may be made by maintaining transactions at fair prices, it is desirable to use a system that is constructed so that offer prices and purchase prices offered by providers and consumers are disclosed only to the providers and consumers offering these prices.

Concrete examples of matching include the matching of providers and consumers so that the number of matchings completed is maximized, the matching of providers and consumers so that the differences in price are maximized, the matching of providers and consumers so that the total amounts of the purchase prices and offer prices are maximized, and the matching of providers and consumers so that the sum of the above-described fee and differences in price are maximized.

A system equipped with a offer condition receiving means that receives data relating to offer conditions for common goods and services, including offer prices for these goods or services, from providers, and that accumulates this offer condition data in a specified offer condition accumulating section in association with the above-described providers, a purchase condition receiving means that receives data relating to purchase conditions, including the purchase prices of the above-described goods or services, from consumers, and that accumulates this purchase condition data in a specified purchase condition accumulating section in association with the above-described consumers, and a matching means that matches all or part of a plurality of items of accumulated offer condition data and all or part of a plurality of items of accumulated purchase condition data, regardless of whether the offer prices and purchase prices agree or disagree, by comparing the above-described plurality of items of offer condition data and plurality of items of purchase condition data, may be cited as an example of a concrete embodiment of the present invention.

Here, the term "in association with providers" includes association with terminal computers in cases where, for example, providers have accessed the system using such terminal computers, in addition to association of the offer condition data with the providers themselves utilizing identifiers such as passwords, etc., that are assigned to the providers. The same is true regarding the term "in association with consumers".

In order to clarify when matching has been accomplished so that this matching can be used in a practical manner, it is desirable that the system be arranged so that the offer condition receiving means receives a desired period for the determination of matching as desired by the provider, and so that the purchase condition receiving means receives a desired period for the determination of matching as desired by the consumer, and also that the system be arranged so that an extraction means extracts offer condition data and purchase condition data during the desired period for the determination of matching.

In a conventional auction, as described above, providers or consumers who were unable to bid successfully must take the trouble of re-entering another auction. In order to eliminate this problem, and in order to improve reliability with respect to the present facility by automatically allowing participation in the next matching so that the trouble of re-entry is eliminated, and so that the completion of transactions may be expected with an extremely high probability, it is desirable to devise the system so that offer condition data and purchase condition data that have not be matched be automatically re-added to the object of extraction in the extraction means until the desired period for the determination of matching of such data has elapsed.

Computers equipped with a offer condition transmitting means which transmits offer condition data constituting data that relates to offer conditions including the offer prices of goods or services are desirable as a preferred embodiment of the terminal computers used by providers in cases where the present invention is realized using a host computer and terminal computers that are connected to this host computer via a communications network such as the Internet, etc. Similarly, computers equipped with a purchase condition transmitting means which transmits purchase condition data constituting data that relates to purchase conditions including the purchase prices of goods or services are desirable as preferred embodiment of the terminal computers used by consumers.

In order to eliminate excessive competition and unfair competition, and make a contribution by maintaining transactions at fair prices, it is desirable to construct the system so that the offer prices included in respective sets of offer condition data and the purchase prices included in respective sets of purchase condition data are disclosed only to the providers and consumers who have offered these prices. Here, the term "disclose" refers to the "outputting" in general, of the above-described offer prices and purchase prices, such as transmission by e-mail or some other appropriate method to devices such as computers, telephones or facsimile devices, etc., used by the providers and consumers, printing on paper via a printer, or display on computer displays, etc. The system is thus devised so that only the providers and consumers themselves are informed of the prices that they have submitted. Furthermore, the term "disclosed only to the providers and consumers" means literally that "only these persons themselves" are informed. However, this "only" is not meant to exclude persons with a fixed obligation to maintain confidentiality such as managers of competitive selling systems and computer operators, etc. Even if such persons are informed of the above-described offer prices and purchase prices, this knowledge is exempt from the above-described "only". Below, "disclosed only ..." will have the same sense as that described here.

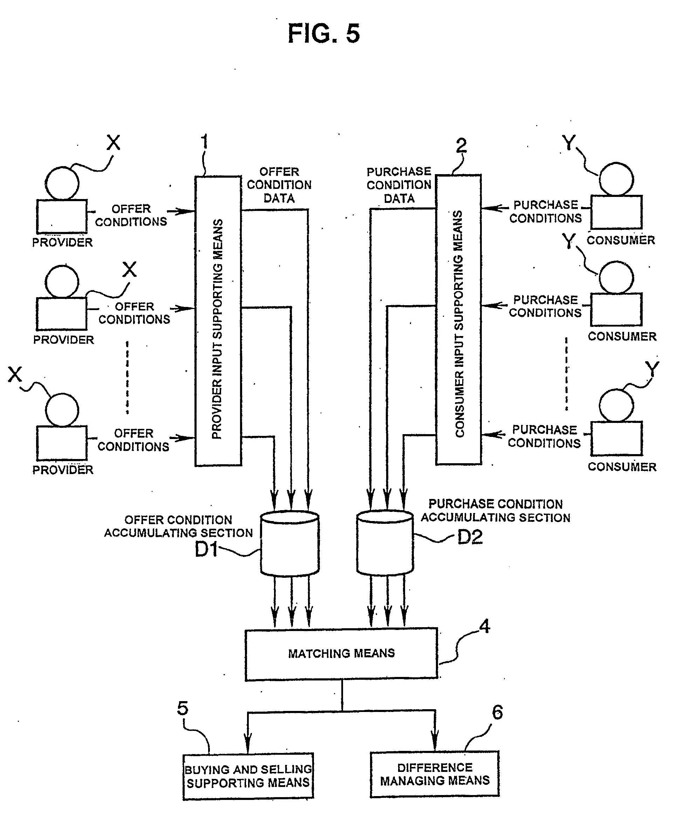

Meanwhile, an example of a more concrete aspect of the overall system used to realize the present invention in a suitable manner (in some cases, the system may be constructed exclusively from a stand-alone computer, while in other cases, the system may be constructed using a host computer and terminal computers that are connected to this host computer via a communications network such as the Internet, etc., as described above) is a transaction supporting facility which is used to support commercial transactions completed between a plurality of providers providing goods or services and a plurality of consumers receiving the offer of the goods or services via a computer system as shown in Figure 5, and which is equipped with an input supporting means for provider use which receives offer conditions including offer prices for specified goods or services, and stores these offer conditions as offer condition data in a specified offer condition accumulating section in association with the providers who have submitted these offer conditions, an input supporting means for consumer use which receives purchase conditions including purchase prices for the above-described specified goods or services, and stores these purchase conditions as purchase condition data in a specified purchase condition accumulating section in association with the consumers who have submitted these purchase conditions, a matching means which compares the offer condition data and purchase condition data stored in the above-described respective accumulating sections, and combines offer condition data and purchase condition data so that at least the offer price and purchase price are the same or the purchase price is higher than the offer price, a buying and selling supporting means which provides support so that the buying and selling of the above-described specified goods or services are performed between the providers and consumers involved in the offer condition data and purchase condition data whose combinations have been determined by the above-described matching means, in accordance with the offer prices and purchase prices respectively submitted by these providers and consumers, and a difference managing means which manages the differences between purchase prices and offer prices that result from the buying and selling accomplished utilizing the above-described buying and selling supporting means. Furthermore, the above-described processing means include this buying and selling supporting means.

Furthermore, the system may be devised so that prices that have a specified leeway are received as offer conditions and purchase conditions. In such a case, the number of combinations whereby buying and selling are successfully accomplished is further increased; accordingly, more transactions can be completed, which is desirable for both the consumers and providers. Moreover, in this case, the matching means may be devised so that the above-described offer condition data and purchase condition data are compared, and the offer condition data and purchase condition data are combined so that at least the lowest purchase prices are the same as or higher than the highest offer prices.

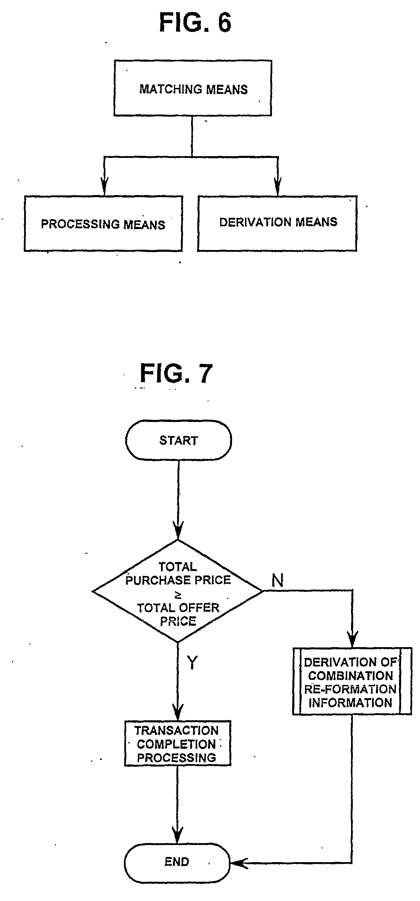

Generally, in actual commercial transactions, it may be considered that providers wish to provide goods or services at the highest possible price (this is conspicuously true in the case of auction type transactions). On the other hand, it may be considered that consumers wish to receive the offer of such goods or services by purchasing these goods or services at the lowest possible prices. Accordingly, in the case of transactions that are carried out simultaneously for specified goods or services, the total amount of offer prices submitted by a plurality of providers may exceed the total amount of purchase prices submitted by a plurality of consumers. One example of a preferred embodiment of the present invention for completing transactions in such cases as well, regardless of whether the individual offer prices and purchase prices agree or disagree, is a system equipped with a matching means which compares offer condition data including offer prices received from providers and purchase condition data including purchase prices received from consumers for specified goods or services, and combines at least some of the offer condition data and purchase condition data so that the total offer prices and total purchase prices are the same, or so that the total purchase prices are higher than the total offer prices, a processing means which performs processing used to complete transactions between the providers and consumers involved in the offer condition data and purchase condition data for which combinations have been determined by the above-described matching means, in accordance with the offer prices and purchase prices respectively submitted by these providers and consumers, and a derivation means which derives combination re-forming information used to re-form combinations in the case of offer condition data and purchase condition data that could not be matched by the matching means, so that the total offer prices and total purchase prices are the same, or so that the total purchase prices are higher than the total offer prices, as shown in Figure 6. Furthermore, an example of the flow of this system is shown in Figure 7.

Information suggesting the monetary reasons for the failure of matching may be cited as an example of information that is appropriate for use as the combination re-forming information that is derived by the above-described derivation means.

In such cases, in order to establish matching between offer condition data and purchase condition data that could not be matched, it is necessary to make an adjustment by, for example, altering the offer prices and purchase prices contained in such condition data, using the above-described monetary reasons as an indicator.

Accordingly, as a configuration that is desirable in concrete terms and that is suitable for practical use, it is desirable to devise the system so that average offer prices in the offer condition data successfully matched by the matching means, or average purchase prices in the purchase condition data thus matched, or both, are calculated in the above-described derivation means as information suggesting the above-described monetary reasons. The prices that are calculated may be either the above-described average offer prices or average purchase prices, or both.

As another desirable configuration, it is desirable to devise the system so that the differences between the total offer prices of offer condition data and the total purchase prices of purchase condition data that could not be successfully matched by the matching means are calculated in the derivation means as information suggesting the above-described monetary reasons, or to devise the system so that either the differences between certain prices located between the lowest offer prices and the highest offer prices in offer condition data that was successfully matched by the matching means and the offer prices in offer condition data that could not be successfully matched by the matching means, or the differences between the highest or lowest purchase prices in purchase condition data that was successfully matched by the above-described matching means and the purchases prices in the purchase condition data that could not be successfully matched by the matching means, or both types of differences, are calculated in the derivation means as information suggesting the above-described monetary reasons.

Furthermore, if providers or consumers can be motivated to alter the offer prices or purchase prices using the results calculated as described above, then the probability of successful matching can be increased even in cases where matching was not successfully accomplished.

In order to realize this in an appropriate manner while eliminating excessive competition and unfair competition and promoting fairness, it is desirable to devise the system so that the above-described calculated results, or prices determined from these calculated results by means of specified calculation formulae or tables, are disclosed only to providers or consumers who submitted offer prices or purchase prices that could not be matched. Specifically, the system may be devised so that the above-described calculated results themselves are disclosed, or so that prices determined on the basis of these calculated results by means of specified calculation formulae, etc., are disclosed. In addition to arithmetical calculations, logical operations are also included in these "calculation formulae, etc.". The term "calculation formulae, etc." will have the same meaning below. Furthermore, the term "determined prices" includes fixed amounts obtained on the basis of calculation formulae, etc., for the purpose of allocation to respective providers or consumers, and monetary amounts that are weighted in correspondence with the initially submitted offer prices or purchase prices, etc.

In addition, it is also effective to devise the system so that the above-described calculated results, and offer prices or purchase prices to be changed that are determined on the basis of calculation formulae or tables using offer prices or purchase prices that could not be matched as parameters, are disclosed only to providers or consumers who submitted offer prices or purchase prices that could not be matched. Here, the term "offer prices or purchase prices to be changed" includes monetary amounts obtained by adding or subtracting prices obtained on the basis of calculation formulae, etc. (for the purpose of allocation to respective providers or consumers) to or from the initially submitted offer prices or purchase prices.

Especially in cases where the differences between the total offer prices of offer condition data and the total purchase prices of purchase condition data that could not be successfully matched are calculated, it is also effective to devise the system so that prices obtained by dividing the calculated differences or monetary amounts greater than the calculated differences by the number of items of offer condition data, the number of items of purchase condition data or the total number of items of both types of condition data that could not be matched are respectively disclosed to the providers or consumers who submitted these offer prices or purchase prices.

In cases where, as a result of such disclosure of information suggesting the monetary reasons that matching could not be successfully accomplished, alterations in offer prices or purchase prices are received on the basis of such information from providers or consumers corresponding to offer condition data or purchase condition data that could not be successfully matched, the chances of successfully matching offer condition data and purchase condition data that could not be matched initially can be concretely improved if the system is devised so that the contents of the offer condition data or purchase condition data are altered in accordance with the above-described altered offer prices or purchase prices, these altered offer prices or purchase prices are again compared, and at least some of the offer condition data and purchase condition data are combined so that the total offer prices and total purchase prices are the same or so that the total purchase prices are higher than the total offer prices. Furthermore, there may be cases in which the information submitted to the providers or consumers and the offer prices or purchase prices following alterations submitted by these persons are different; in such cases, the submitted prices may be received "as is", thus respecting the wishes of the providers and consumers, or the system may be devised so that the probability of successful re-matching is varied by means of re-submitted monetary amounts.

Meanwhile, cases in which the offer prices and purchase prices have been given some leeway beforehand, i.e., cases in which the offer prices and purchase prices include in advance a buy/sell price that indicates the preferential transaction price and permissible prices that indicate a range of prices that allow a transaction to be completed, may also be envisioned. In such cases, an example of a desirable configuration which allows transactions to be completed even if the total monetary amount of the offer prices offered by a plurality of providers exceeds the total monetary amount of the purchase prices offered by a plurality of consumers, and regardless of whether the individual offer prices and purchase prices agree or disagree, is a configuration in which the above-described matching means compares the offer prices and purchase prices and combines offer condition data and purchase condition data using the buy/sell prices in a preferential manner, and the combination re-formation information derived by the derivation means is used as information for re-matching, using the above-described permissible prices, offer condition data and purchase condition data that could not be matched.

As a result of offer prices and purchase prices that have been given a specified leeway beforehand thus being submitted to providers and consumers, the need to re-submit altered offer prices and purchase prices is eliminated even in the case of offer condition data and purchase condition data that could not be successfully matched by the matching means; accordingly, the chances of successful matching in a short time can be improved.

Furthermore, in order to match in concrete terms, by a method similar to that of the matching means, offer condition data and purchase condition data that could not be matched by the matching means, it is desirable to devise the system so that the offer condition data and purchase condition data that could not be matched are compared within the range of the above-described permissible prices on the basis of the above-described combination re-formation information, and such offer condition data and purchase condition data are re-combined so that the total offer prices and total purchase prices are the same, or so that the total purchase prices are higher than the total offer prices. Ordinarily, it may be expected that providers, who tend to desire the completion of a transaction at a higher price, will set offer prices with the highest monetary amount of the permissible prices as the sell price, and that consumers, who tend to desire the completion of a transaction at a lower price, will set purchase prices with the lowest monetary amount of the permissible prices as the buy price. Accordingly, in regard to the permissible prices used in this re-matching, any prices within the ranges of the permissible prices may be used; however, particularly in order to allow a simple comparison of permissible prices with each other, the system may also be devised so that the lowest monetary amounts of the permissible prices are utilized in the case of offer prices, and so that the highest monetary amounts of the permissible prices are used in the case of purchase prices.

An example of a desirable configuration that can be realized in more concrete terms for the purpose of accomplishing quick re-matching is a configuration in which the system is devised so that the average offer prices in offer condition data that was successfully matched by the matching means, or the average purchase prices in purchase condition data that was successfully matched, or both types of average prices, are calculated in the derivation means, and the calculated results, prices determined on the basis of the calculated results by means of specified calculation formulae or tables, prices determined on the basis of calculation formulae or tables using the calculated results and offer prices or purchase prices that could not be matched as parameters, or any of the above-described permissible prices, are changed to the object of re-matching.

In addition, the system may also be devised so that the differences between the total offer prices of offer condition data and the total purchase prices of purchase condition data that could not be successfully matched by the matching means are calculated in the derivation means, or so that either the differences between certain prices located between the lowest offer prices and the highest offer prices in offer condition data that was successfully matched by the matching means and the offer prices in offer condition data that could not be successfully matched by the matching means, or the differences between the highest or lowest purchase prices in purchase condition data that was successfully matched by the above-described matching means and the purchases prices in the purchase condition data that could not be successfully matched by the matching means, or both types of differences, are calculated in the derivation means. Furthermore, the system may be devised so that the calculated results, prices determined on the basis of the calculated results by means of specified calculation formulae or tables, prices determined on the basis of calculation formulae or tables using the calculated results and offer prices or purchase prices that could not be matched as parameters, or any of the above-described permissible prices, are changed to the object of re-matching.

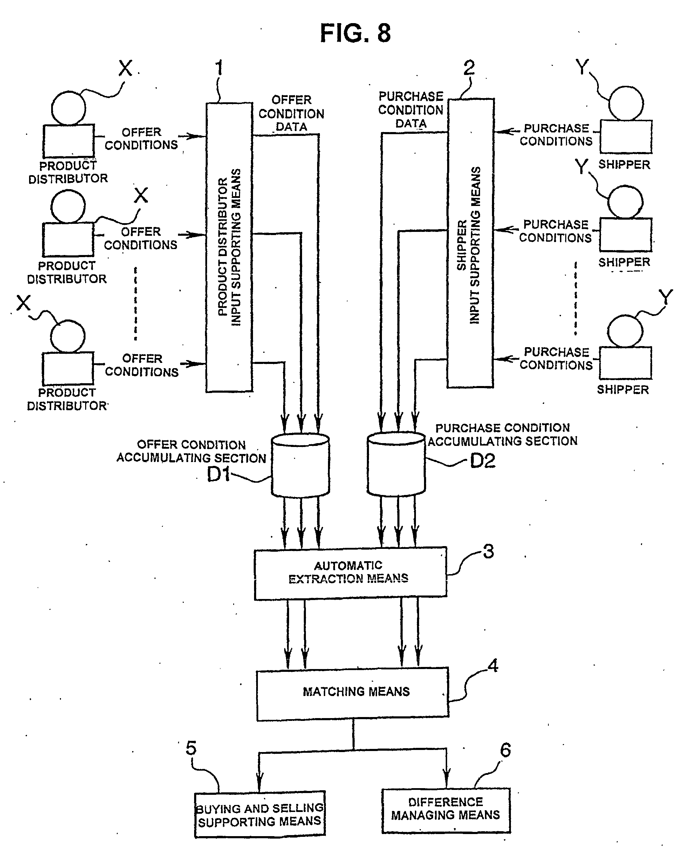

Furthermore, as shown in Figure 8, the present invention has an especially great effect when used in the field of product distribution. Specifically, the fact that the number of completed transactions is increased, which is an effect of the present invention, matches the requirement that "goods must always be shipped" in the product distribution industry, so that the effect is conspicuous. Furthermore, since various types of information are gathered so that overall trends are clarified, most waste can be eliminated. For example, one point that can be cited is that the empty vehicle rate, which is a serious problem from an environmental standpoint, can be greatly reduced.

Furthermore, since prices are submitted from both sides, and mutual transaction partners are automatically determined by a matching means, existing individual contract type product distribution can be eliminated. Specifically, there is a shift from the conventional shipping price setting system controlled by shippers to an on-demand type price setting system in which the prices are set by product distributors; accordingly, a sound open market in which there are no master contractor type product distribution firms can be realized.

In addition, since all product distribution business transacted via the present facility can easily be converted into data and analyzed, travel distances, travel times, travel expenditures, fuel expenditures and environmental impact values, etc., can easily be calculated for individual vehicles as information for respective product distributors. Accordingly, document control, etc., based on ISO standards can also be accomplished at the same time.

In order to clarify when the determination of combinations by the matching means will be performed so that the system is suitable for practical use, it is desirable: that a product distributor input supporting means be provided as a means which receives a desired period for the determination of matching as desired by the product distributor, and which adds this data to the above-described offer condition data; that a product distributor input supporting means be provided as a means that receives a desired period for the determination of matching as desired by the product distributor, and that adds this data to the above-described offer condition data, that an automatic extraction means be provided as a means which satisfies the above-described shipping conditions, and which extracts offer condition data and purchase condition data that has desired periods for the determination of matching including the above-described determination dates and times; and that the matching means be a means which combines the offer condition data and purchase condition data extracted by the above-described automatic extraction means at the predetermined determination dates and times.

In more concrete terms, a system in which a plurality of the above-described determination dates and times are intermittently set may be cited as an example of such a system.

Furthermore, in the case of conventional auctions, since the auction is completed by the completion of buying and selling as described above, product distributors and shippers who were unable to bid successfully must take the trouble of bidding in another auction. In order to eliminate this problem and automatically allow participation in the next matching so that the trouble of re-entry is eliminated and so that work can be accomplished with an extremely high probability, a system which is equipped with a carry-over means which automatically re-adds the offer condition data and purchase condition data for which a combination could not be determined by the matching means to the object of extraction by the automatic extraction means until the desired period for the determination of matching of this data has elapsed.

Meanwhile in order to eliminate excessive competition and unfair competition so that shipping can be accomplished at a fair price, it is desirable to construct the system so that offer prices included in the respective offer condition data and purchase prices included in the respective purchase condition data are disclosed only to the product distributors and shippers who submitted these prices.

An example of a concrete embodiment is a system equipped with a combination method setting means that sets the method by which the matching means combines the offer condition data and purchase condition data in accordance with a specified preferential order in cases where there are a plurality of methods of combining offer condition data and purchase condition data.

In order to increase the number of completed transactions and thus make product distribution more efficient, it is desirable to construct the combination method setting means as a means that sets the method of combining offer condition data and purchase condition data while giving highest priority to maximizing the number of combinations of such data. Furthermore, for various other purposes, the combination method setting means may also be constructed as a means which sets the method of combining offer condition data and purchase condition data while giving highest priority to maximizing the differences between purchase prices and offer prices generated by the combination of such data, or as a means which sets the method of combining offer condition data and purchase condition data while giving highest priority to maximizing the total amounts of purchase prices and offer prices generated by the combination of such data.

Furthermore, since the determination of combinations by such an automatic extraction means and matching means is performed by a black box consisting of a computer, it is desirable from the standpoint of avoiding needless questions and disputes to disclose at least the algorithms used to the product distributors and shippers.

For product distributors or shippers for whom combinations were ultimately not determined, it is necessary to ascertain how far these parties must negotiate in terms of conditions in order to find a transaction partner. Accordingly, it is extremely desirable from a practical standpoint to provide a fuzzy searching means which outputs, in response to a specified request signal inputted by a product distributor or shipper, information concerning the offer conditions or purchase conditions submitted by this product distributor or shipper, relating to all or part of the conditions of transaction partners that do not satisfy these offer conditions or purchase conditions, but that are within a specified range.

An example of a concrete configuration of this fuzzy searching means is a means which outputs information relating to all or part of the conditions of transaction partners who require as conditions starting points and destinations that are within a specified distance from regions connecting these starting points and destinations, or that are within a distance that can be reached in a specified time, in cases where the offer condition data and purchase condition data include at least a starting point and a destination as requisite conditions.

In order to eliminate inferior product distributors and shippers so that a contribution can be made to reliability and the maintenance of quality, a system which is equipped with a registration means for registering product distributors and shippers, and which is constructed so that only product distributors and shippers that have been registered by this registration means can utilize the system, is desirable.

In the case of small-scale product distributors or the like for whom the trouble involved in billing and payment of shipping fees is especially bothersome, e.g., product distributors who carryout operations from contract to shipping at an individual level, trouble such as forgetting to submit bills, etc., has conventionally been common. In order to eliminate such trouble, and especially in order to realize a saving in the effort involved in accounting, a system equipped with an accounting agent means which confirms from shippers or product distributors that shipping work has been performed or definitely will be performed, and then automatically performs the accounting relating to said shipping work as an agent for both shippers and product distributors, is desirable.

### Brief Description of the Drawings

Figure 1 is an overall structural diagram of the invention of Claim 1.
Figure 2 is a flow chart which shows one operation of the invention of Claim 2.
Figure 3 is an overall structural diagram of the invention of Claim 3.
Figure 4 is a flow chart which shows one operation of the invention of Claim 3.
Figure 5 is an overall structural diagram of the invention of Claim 13.
Figure 6 is an overall structural diagram of the invention of Claim 21.
Figure 7 is a flow chart which shows one operation of the invention of Claim 21.
Figure 8 is an overall structural diagram of the invention of Claim 43.
Figure 9 is a system structural diagram of the transaction supporting facility in a first embodiment of the present invention.
Figure 10 is a structural diagram of the computer system in the same embodiment.
Figure 11 is a functional block diagram which shows the transaction supporting facility in the same embodiment.
Figure 12 is a screen explanatory diagram which shows the offer condition input window in the same embodiment.
Figure 13 is a screen explanatory diagram which shows the purchase condition input window in the same embodiment.
Figure 14 is an exemplary explanatory diagram which illustrates the operation of the matching means in the same embodiment.
Figure 15 is an exemplary explanatory diagram which illustrates the operation of the matching means in the same embodiment.
Figure 16 is an exemplary explanatory diagram which illustrates the operation of the matching means in the same embodiment.
Figure 17 is an exemplary explanatory diagram which illustrates the operation of the matching means in the same embodiment.
Figure 18 is an exemplary explanatory diagram which illustrates the operation of the matching means in the same embodiment.
Figure 19 is a screen explanatory diagram which shows the screen of the search results obtained by the fuzzy searching means in the same embodiment.
Figure 20 is a functional block diagram which shows the transaction supporting facility in the same embodiment.
Figure 21 is a schematic flow chart which shows the flow of commercial transaction determination in a second embodiment of the present invention.
Figure 22 is an explanatory diagram which shows the automatic extraction process and matching process in the same embodiment.
Figure 23 is an explanatory diagram which shows the automatic extraction process and matching process in the same embodiment.
Figure 24 is an explanatory diagram which shows the automatic extraction process and matching process in the same embodiment.
Figure 25 is a functional block diagram of the transaction supporting facility in a third embodiment of the present invention.
Figure 26 is a schematic flow chart which shows the flow of commercial transaction determination in the same embodiment.
Figure 27 is an explanatory diagram which shows the matching process in the same embodiment.
Figure 28 is an explanatory diagram which shows the matching process in the same embodiment.
Figure 29 is a flow chart which shows the combination re-formation information derivation process performed by the derivation means in the same embodiment.
Figure 30 is an explanatory diagram which shows the re-matching process in the same embodiment.
Figure 31 is an explanatory diagram which shows the re-matching process in the same embodiment.
Figure 32 is a flow chart which shows the combination re-formation information derivation process performed by the derivation means in a first modification of the same embodiment.
Figure 33 is an explanatory diagram which shows the re-matching process in the same modification.
Figure 34 is an explanatory diagram which shows the re-matching process in the same modification.
Figure 35 is a flow chart which shows the combination re-formation information derivation process performed by the derivation means in a second modification of the same embodiment.
Figure 36 is an explanatory diagram which shows the re-matching process in the same modification.
Figure 37 is an explanatory diagram which shows the re-matching process in the same modification.
Figure 38 is a flow chart which shows the combination re-formation information derivation process performed by the derivation means in a third modification of the same embodiment.
Figure 39 is an explanatory diagram which shows the re-matching process in the same modification.
Figure 40 is an explanatory diagram which shows the re-matching process in the same modification.
Figure 41 is a functional block diagram of the transaction supporting facility in a fourth embodiment of the present invention.
Figure 42 is a screen explanatory diagram which shows the offer condition input window in the same embodiment.
Figure 43 is a screen explanatory diagram which shows the purchase condition input window in the same embodiment.
Figure 44 is an explanatory diagram which shows the matching process in the same embodiment.
Figure 45 is an explanatory diagram which shows the matching process in the same embodiment.
Figure 46 is a flow chart which shows the combination re-formation information derivation process performed by the derivation means in the same embodiment.
Figure 47 is an explanatory diagram which shows the re-matching process in the same embodiment.
Figure 48 is a flow chart which shows the combination re-formation information derivation process performed by the derivation means in a first modification of the same embodiment.
Figure 49 is an explanatory diagram which shows the re-matching process in the same modification.
Figure 50 is a flow chart which shows the combination re-formation information derivation process performed by the derivation means in a second modification of the same embodiment.
Figure 51 is a flow chart which shows the combination re-formation information derivation process performed by the derivation means in a third modification of the same embodiment.
Figure 52 is an explanatory diagram which shows the matching process in a modification of the present invention.
Figure 53 is an explanatory diagram which shows the matching process in the same modification.

### Best Mode for Carrying Out the Invention

### <First Embodiment>

The first embodiment of the present invention will be described below with reference to the accompanying drawings.

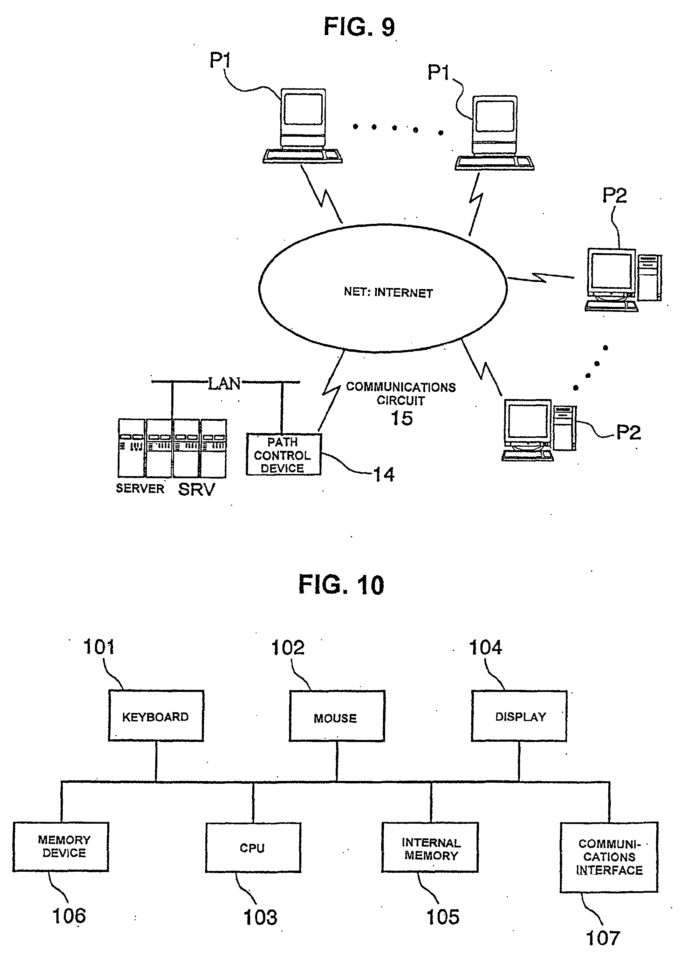

The transaction supporting facility of the present embodiment is used to support and promote transactions involved in product distribution. As shown in Figure 9, this transaction supporting facility is constructed utilizing terminal computers P1 and P2 constituting information processing devices that are respectively installed on the side of a product distributor X and the side of a shipper Y, and a server computer SRV which is connected to these terminal computers P1 and P2 via a communications circuit such as the Internet, etc., so that two-way communication is possible.

Here, the term "product distributor X" refers to a distributor who is registered as a person able to utilize this facility among an unspecified large number of business people. This registration is accomplished using a registration supporting means (not shown). For example, in a case where an unspecified business person of the above-described type accesses the server computer SRV on line, the above-described registration means requests the input of basic information for this business person, issues an ID that serves as an identifier to this business person, and stores the above-described basic information in memory in association with this ID. In the present embodiment, the qualifications of the business person are examined at the time of this registration in order to prevent any drop in the reliability and quality of shipping. The above-described ID may be acquired according to various concrete configurations; for example, one ID may be acquired in company units, or one ID may be acquired in individual units. After the above-described business person has registered as product distributor X, this business person can utilize the present facility by inputting his ID (and if necessary a password) into the terminal.

Like the product distributor X, the shipper Y is a person who has been registered as a person allowed to utilize this facility. Furthermore, the registration procedure and acquisition of ID, etc., are the same as described above; accordingly, a description is omitted.

Next, the constructions of the devices utilized to construct this transaction supporting facility will be described. The terminal computers P1 and P2 may include person computers, facsimile devices, telephones, cellular phones and portable type information processing terminals (so-called PDA), etc. In working the present invention, these devices may also be used in combination; however, in the following description of the present embodiment, a case will be described in which the terminal computers P1 and P2 are personal computers. Furthermore, the locations of these terminal computers P1 and P2 are not limited to domestic locations; these computers may also be located overseas.

Furthermore, as shown in Figure 10, these terminal computers P1 and P2 are each equipped with input means such as a keyboard 101 and mouse 102, etc., an output means such as a display 104, etc., a memory device 106 such as an HD, etc., a CPU 103, an internal memory 105, and a communications interface 107, etc. Furthermore, the computers have a web browser, etc.

The server computer SRV has a web server function and a data base function, etc., and has a construction that is substantially similar to that of the terminal computers P1 and P2. Furthermore, this server computer SRV may be concentrated in one place, or may be dispersed. The location of this server computer is not limited to a domestic location; the serve computer may also be located overseas.

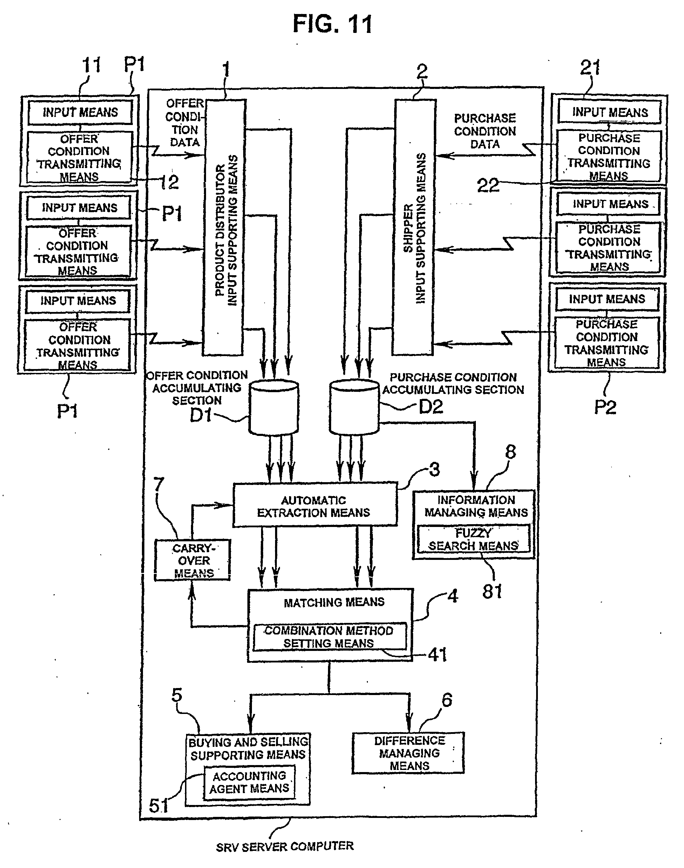

Furthermore, as shown in Figure 11, the transaction supporting facility in the present embodiment performs at least the functions of a product distributor input supporting means 1, shipper input supporting means 2, automatic extraction means 3, matching means 4, buying and selling supporting means 5, difference managing means 6, carry-over means 7 and information managing means 8 as a result of the operation of the CPUs 103 and peripheral devices in the above-described terminal computers P1 and P2 and server computer SRV in accordance with specified programs stored in the memory devices 106 of these computers P1, P2 and SRV. Here, the product distributor input supporting means 1 is a means that receives offer condition data transmitted from the terminal computer P1 on the side of the product distributor using the input means 11 (keyboard 101, etc.) and offer condition transmitting means 12 (communications interface, etc.), and that accumulates this data in a offer condition accumulating section D1 set in the memory device 106 of the server computer SRV. Furthermore, the shipper input supporting means 2 is a means that receives offer condition data transmitted from the terminal computer P2 on the side of the shipper using the input means 21 (keyboard 101, etc.) and purchase condition transmitting means 22 (communications interface 107, etc.), and that accumulates this data in a purchase condition accumulating section D2 set in the memory device 106 of the server computer SRV. Furthermore, the system may be devised so that the above-described respective types of condition data are received by FAX or mail from the product distributor X and shipper Y, and so that a facility manager, etc., who receives this data inputs the data directly into the server computer SRV. The roles of the product distributor input supporting means 1 and shipper input supporting means 2 in such a case include the input means (keyboard 101, etc.), etc., of the server computer SRV.

Furthermore, it is not necessary that the product distributor X and shipper Y install special programs in their own terminal computers P1 and P2; for example, a general-purpose application of the browser, etc., may be utilized.

Next, the operation and method of utilization of the transaction supporting facility of the present embodiment will be described in detail, along with a description of the functions of the respective means described above.

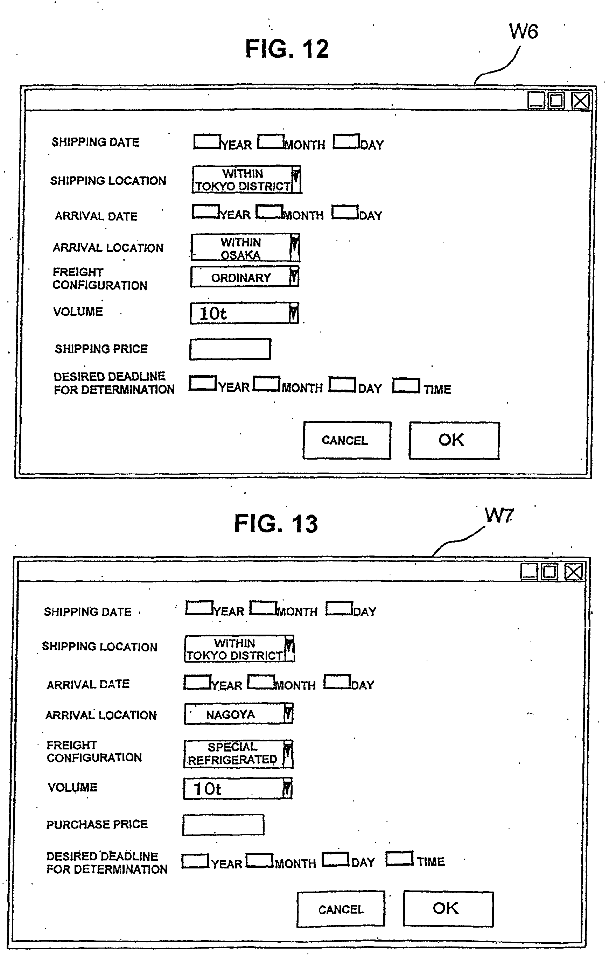

First, when the product distributor X logs in from his own terminal computer P1 in order to receive an order, a offer condition input window W6 which urges the input of offer conditions consisting of the shipping date, shipping location, arrival data, arrival location, freight configuration, volume, shipping offer price and desired deadline for determination is displayed on the screen as shown in Figure 12. Here, the freight configuration is divided into "ordinary" and "special", and the "special" category is further divided into a plurality of categories in accordance with the characteristics of the goods that constitute the freight (e.g., fresh foodstuffs, automobiles, etc.). Then, when the product distributor X inputs this offer condition data utilizing the above-described window W6, and clicks on the OK button at the lower right (this is referred to as "entry"), this offer condition data is transmitted to the server computer SRV, and is stored in the above-described offer condition accumulating section D1 in association with this product distributor X. This is the function of the product distributor input supporting means 1.

Meanwhile, when the shipper Y logs in from his own terminal computer P2 in order to place an order, a purchase condition input window W7 which urges the input of purchase conditions consisting of the shipping date, shipping location, arrival data, arrival location, freight configuration, volume, purchase price and desired deadline for determination is displayed on the screen as shown in Figure 13. Then, when the shipper Y inputs the purchase condition data utilizing this window W7 and clicks on the OK button at the lower right (this is called "entry"), the above-described purchase condition data is transmitted to the server computer SRV, and is stored in the above-described purchase condition accumulating section D2 in association with this shipper Y.

Furthermore, during this inputting of conditions, the product distributor X and shipper Y can refer to matching information and averages or dispersions of prices, etc., involved in similar conditions in this past. This is accomplished by inputting a reference information request signal so that the information managing means 8 outputs information corresponding to this request signal to the respective terminal computers P1 and P2. Here, furthermore, since the product distributor X tends to set the price on the high side, the system may be set so that the above-described reference price is displayed beforehand at a price that is lower than the average or dispersion price by a specified price, and since the shipper Y tends to set the price on the low side, the system may be set so that the above-described reference price is displayed beforehand at a price that is higher than the average or dispersion price by a specified price. Here, the information managing means 8 is a means that is used for conversion into data and analysis of all product distribution business transacted via this facility. However, the system is constructed so that the offer prices contained in respective offer condition data and the purchase prices contained in respective purchase condition data are disclosed only to the product distributor X and shipper Y who submitted these prices, and the system is a closed system which is devised so that when the product distributor X and shipper Y input conditions, individual items of condition information, of not only the business person of the same trade but also the transaction partner, cannot be ascertained.

Thus, while offer condition data and purchase condition data are accumulated in the respective condition accumulating sections D1 and D2, an operation that might be referred to as a double-closed auction is automatically performed by computer in order to complete a transaction between the product distributor X and shipper Y who submitted this data.

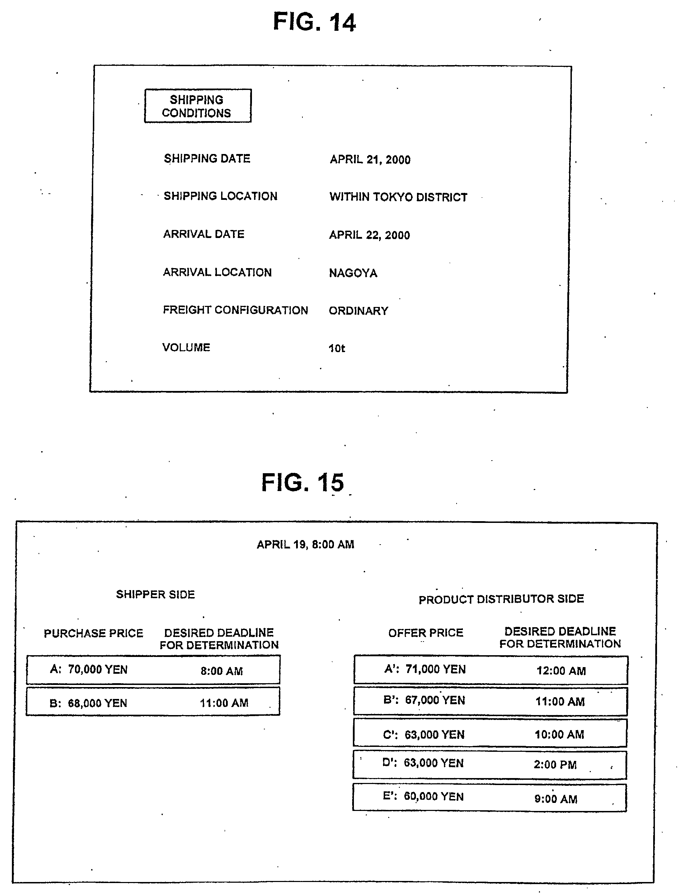

To describe this in detail, when the predetermined date and time for determination, i.e., the limit time (e.g., April 19, 8:00 AM), is reached, the automatic extraction means 3 extracts data that satisfies the shipping conditions from the above-described offer condition data and purchase condition data that indicate the desired deadline for determination following the above-described determination date and time for the specified shipping service that is specified by the shipping conditions excluding the price (shown in Figure 14). Here, the term "shipping conditions" refers to the shipping date, shipping location, arrival date, arrival location, freight configuration and volume.

Furthermore, it is assumed for example that two sets of purchase condition data A and B and five sets of offer condition data A', B', C', D' and E' that satisfy the above-described shipping conditions have been extracted by the above-described automatic extracting means (see Figure 15).

Accordingly, the above-described five sets of offer condition data A', B', C', D' and E' and two sets of purchase condition data A and B are compared by the matching means 4, and are combined so that the offer price and purchase price are the same, or so that the purchase price is higher than the offer price.

In cases where these combinations might conceivably be accomplished in various ways, the system is devised in the present embodiment so that the number of combinations is reduced to a smaller number by the combination method setting means 41, which determines the manner of combination according to a specified preferential order. In concrete terms, the parameter that is given highest priority when this combination method setting means 41 determines the manner in which the data is combined is increasing the number of completed sales transactions. The next highest priority is increasing the difference between the total offer prices and total purchase prices in the combinations. Then, the next highest priority is preferential selection of the product distributors or shippers with the earliest entry. Finally, the last priority is preferential selection of product distributors or shippers with the earliest membership registration.

In this example, the number of sets of purchase condition data is two, and is thus smaller than the number of sets of offer condition data; consequently, the maximum number of buying and selling transactions that can be completed is two, which is the number of sets of purchase condition data. Accordingly, first of all, in order to maximize the number of buying and selling transactions completed, the combination method setting means 41 automatically selects two sets of data from the offer condition data A', B', C', D' and E', and attempts to combine these sets of data with the purchase condition data A and B.

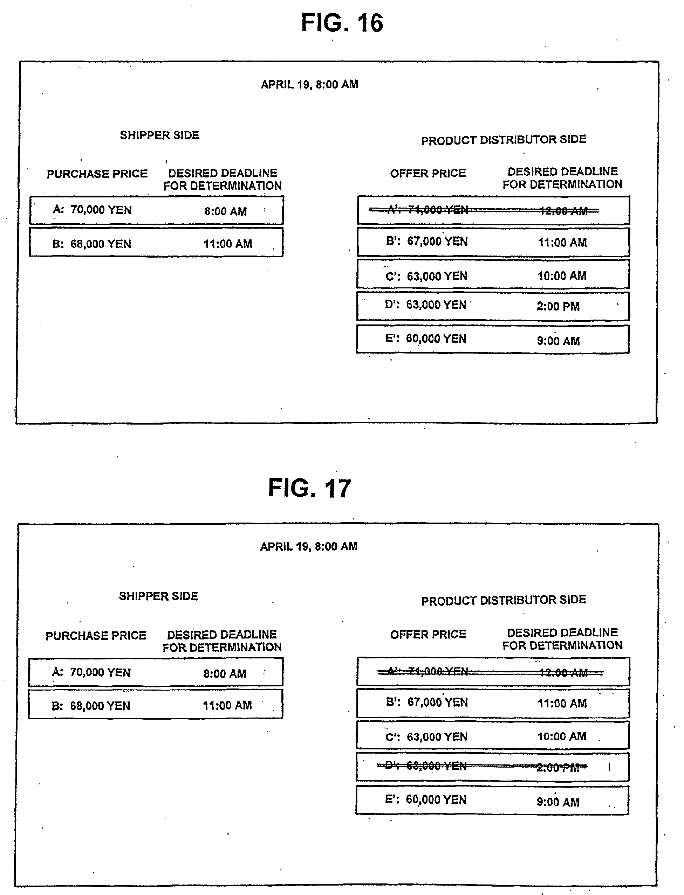

However, the offer condition data A' indicates a offer price of 71,000 yen, which is higher than the purchase price of either set of purchase condition data A or B; accordingly, a buying and selling transaction cannot be completed with either of these sets of purchase condition data A or B. In other words, if the offer condition data A' is selected, the number of buying and selling transactions completed is only one; accordingly, this offer condition data A' is not selected (see Figure 16).

Accordingly, the combination method setting means 41 selects two sets of data from the offer condition data B', C', D' and E'. In this case, the number of buying and selling transactions completed is two regardless of which sets of data are selected.

Next, the combination method setting means 41 selects two sets of data from the offer condition data B', C', D' and E' in order to increase the difference between the total offer price and the total purchase price, which is the second-priority parameter. Furthermore, this difference can be increased by selecting data indicating lower prices. In the present example, the offer condition data E', which indicates the lowest offer price of 60,000 yen, will always be selected. Then, since the two sets of offer condition data C' and D' indicate the next lowest offer price of 63,000 yen, one of these sets of data must be selected.

Then, in accordance with the third-priority parameter described above, the combination method setting means 41 selects the data that has the earlier entry date and time from the product distributors X submitting the offer condition data C' and D', and if these entry dates and times are the same (which is extremely rare), the combination method setting means 41 selects the candidate with the earlier membership registration in accordance with the above-described fourth-priority parameter.

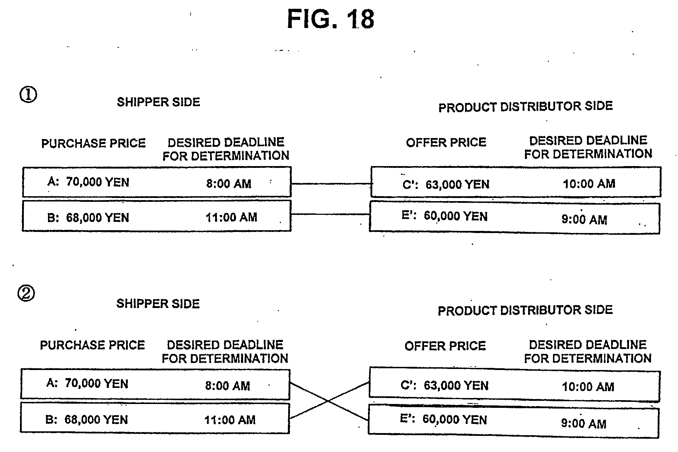

As a result, the offer condition data C' and E' are selected as shown in Figure 17. Furthermore, when these sets of offer condition data C' and E' are to be combined with the purchase condition data A and B, two ways of combining the data, i.e., (1) (A-C', BE') and (2) (A-E', B-C') are conceivable, as shown in Figure 18. These sets may be combined at random; alternatively, further parameters may be set such as combining the higher prices, etc., so that a single manner of combination is always set at the end.

Afterward, various types of support are performed by the buying and selling supporting means 5 so that a transaction involving the above-described shipping service is completed between the product distributor X and shipper Y associated with the offer condition data and purchase condition data, in accordance with the offer price and purchase price submitted by these parties.

In concrete terms, the buying and selling supporting means 5 first concludes an automatic contract between the product distributor X and shipper Y, and performs billing work, etc. This buying and selling supporting means 5 is equipped with an accounting agent means 51 that has an electronic settling function. Withdrawal of the offer prices from the shippers Y (70,000 yen from the shipper associated with A, 68,000 yen from the shipper associated with B) is performed by this accounting agent means 51; and following this withdrawal, deposit are made to the product distributors X (63,000 yen for the product distributor associated with C' and 60,000 yen for the product distributor associated with E') within a specified period of time.

Furthermore, the differences between purchase prices and offer prices generated by these transactions are appropriated for, for example, the improvement and maintenance of the system by the above-described difference managing means 6; however, it would also be possible to devise the system so that these differences are split between the product distributors X and the shippers Y, or so that sets of data which are such that the purchase price is lower than the offer price are matched using all or part of these differences, thus increasing the number of successful matchings.

Meanwhile, the sets of offer condition data A', B' and D' for which combinations could not be determined by the matching means 4 are again automatically added by the carry-over means 7 to the object of extraction by the automatic extraction means 3, until the desired deadline for the determination of matching of these data sets has passed. In the present embodiment, extraction and the determination of combinations are performed every hour; accordingly, if new purchase condition data that satisfies the above-described shipping conditions is accumulated each hour, re-matching is performed between these sets of data.

Furthermore, in cases where combinations have not been determined even after the desired deadline for the determination of matching has passed, it is extremely convenient for the re-inputting of conditions if the product distributors X or shippers Y can ascertain how far they must negotiate in terms of conditions in order to find a transaction partner. Accordingly, in the present embodiment, a fuzzy searching means 81 is provided which is devised so that the product distributors X or shippers Y can input specified request signals utilizing their terminal computers P1 and P2, and so that information relating to all or part of the conditions of transaction partners that do not satisfy the offer conditions or purchase conditions submitted by the product distributors X or shippers Y but that are within a specified range are output for these conditions in accordance with the above-described request signals. Furthermore, this fuzzy searching means 81 is positioned as one constituent element of the information managing means 8.

To describe this in detail, this fuzzy searching means 81 outputs information relating to all or part of the conditions of transaction partners that include as prerequisites shipping points and destination points that are within a specified distance, or that can be reached within a specified time, from regions connecting the shipping points and destination points in the offer condition data and purchase condition data.

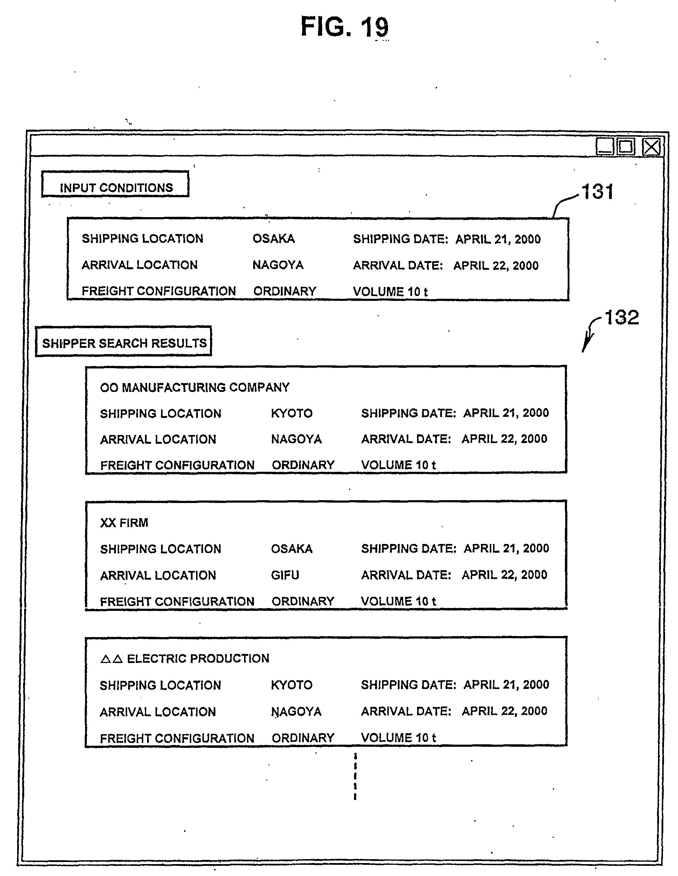

For example, in a case where a product distributor X submits Osaka as the shipping location and Nagoya as the arrival location in the offer conditions as shown in column 131 of Figure 19, when a search is made using this fuzzy searching means 81, a shipper Y who has submitted purchase conditions in which the shipping location and arrival location are slightly out of the way or included along the route is displayed along with the purchase conditions of this shipper (see column 132 in Figure 19). Here, furthermore, the purchase price of the shipper Y is not displayed.

Accordingly, in such a construction, the existing concept in a conventional bidding system or auction system that a transaction can only be completed when the prices of the buyer and seller agree (of course, there may be cases in which a fixed broker's fee is deducted) is completely overturned, so that individual transactions can be simultaneously completed with the participation of a plurality of product distributors X and a plurality of shippers Y. In addition, since transactions can be completed even if the prices submitted by the product distributors X and shippers Y disagree, there is a prospect for the completion of many transactions, so that the difficulty and rarity of completing transactions that are the drawbacks of a conventional auction system can be overcome. Meanwhile, since the product distributors X complete transactions at the shipping offer prices that they themselves have submitted, and the shippers Y also complete transactions at the purchase prices that they themselves have submitted, residual feelings of dissatisfaction in the respective parties can be eliminated.

Furthermore, the absolute prerequisite condition that "goods must always be shipped" in the product distribution industry can also be reliably satisfied in view of the fact that there is a prospect for the completion of many transactions, and in view of the fact that the number of product distributors X is actually greater.

Furthermore, in the present embodiment, since a double-closed system is employed, excessive competition, which is another drawback of auction systems, can be very effectively suppressed.

Moreover, since prices are submitted from both sides, and mutual transaction partners are automatically determined by the matching means 4, existing individual contract type product distribution can be eliminated. Specifically, there is a shift from the conventional shipping price setting system controlled by the shippers to an on-demand type price setting system based on demands from the product distributors X, so that a sound open market with no master contractor type product distribution firms involved can be realized.

In addition, since an information managing means 8 which can convert all of the product distribution business transacted via this facility into data and analyze this data is provided, travel distances, travel times, travel expenditures, fuel expenditures and environmental impact values, etc., can also be easily calculated according to individual vehicles as information for the respective product distributors X. Accordingly, document control, etc., based on ISO standards can also be accomplished at the same time.

Moreover, various alterations of the present embodiment are possible. For example, as a preferential parameter of the above-described combination method setting means, it would also be possible to use maximization of the total amounts of purchase prices and offer prices instead of the above-described maximization of the differences between total offer prices and total purchase prices. In the former case, it is indicated that the possibility of selection by the matching means is higher when a offer price that is as low as possible is submitted on the side of the product distributor, and a purchase price that is as high as possible is submitted on the side of the shipper; accordingly, it may be said that transactions are carried out according to the principle of fair competition. In the latter case, on the other hand, it is indicated that the possibility of selection is higher when a offer price that is as high as possible within a range in which the purchase price is apparently not exceeded is submitted on the side of the product distributor as well. Specifically, if this procedure is used, product distributors who submit unfairly low prices that ignore quality can be excluded, so that an improvement in regard to quality control involved in shipping services can more easily be achieved.

Furthermore, for example, it would also be possible to arrange the purchase condition data and offer condition data respectively in the order of the highest purchase prices and offer prices, and to tie these sets of data together in order from the top, as long as the purchase prices either exceed the offer prices or are the same as the offer prices. Moreover, it goes without saying that various modifications are possible; for example, the system may be devised so that the determination date and time are not fixed, and matching is performed at the point in time at which a specified number of sets of purchase condition data or offer condition data that satisfy the same shipping conditions have been accumulated, etc.

### <Second Embodiment>

The second embodiment of the present invention will be described below with reference to the accompanying drawings.

The transaction supporting facility in this embodiment is used to support and promote general commercial transactions. Like the first embodiment, this embodiment is constructed on a network formed by connecting terminal computers P1 and P2 respectively installed on the side of providers X and consumers Y and a server computer SRV that forms a computer system via a communications circuit such as the Internet, etc., as shown in Figure 9.

Here, the term "providers X" refers to persons who have been registered as persons able to utilize the present facility among an unspecified large number of business people, and the term "consumers Y" refers to persons who have been registered as persons able to use the present facility. Furthermore, the registration procedure and ID acquisition, etc., are the same as in the first embodiment; accordingly, a description is omitted. Furthermore, the equipment used in the construction of this transaction supporting facility consists of terminal computers P1 and P2 such as personal computers, etc., and a server computer SRV, etc. This equipment is also similar to that used in the first embodiment; accordingly, a description is omitted.

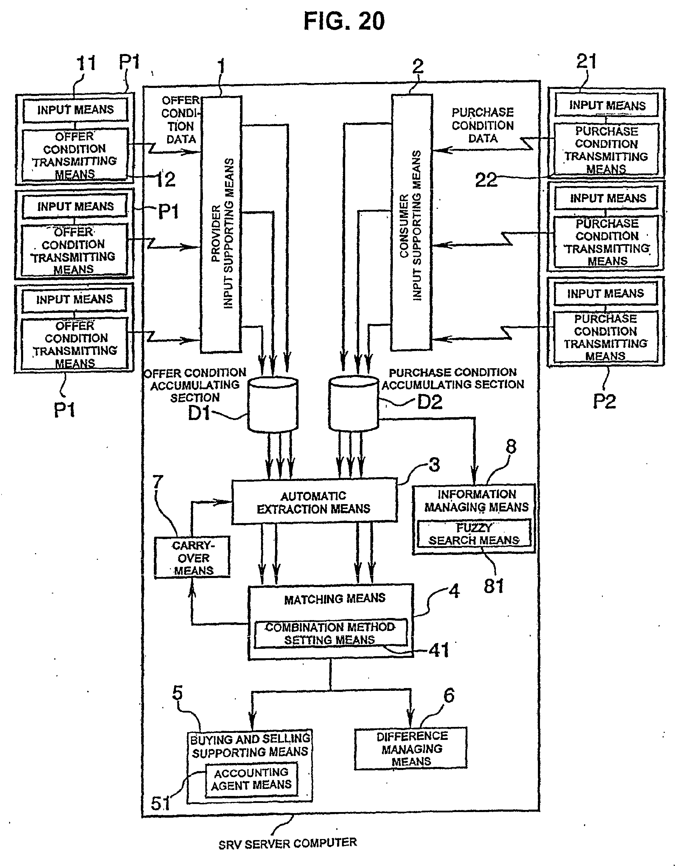

Furthermore, in the present embodiment, as in the above-described first embodiment, the system is devised so that at least the functions of a provider input supporting means 1 which constitutes a offer condition receiving means, a consumer input supporting means 2 which constitutes a purchase condition receiving means, an automatic extraction means 3, a matching means 4, a buying and selling supporting means 5 and a difference managing means 6 are performed as shown in Figure 20 by the operations of the CPUs 103 and peripheral devices in the above-described terminal computers P1 and P2 and server computer SRV in accordance with specified programs stored in the memory devices 106 of these computers P1, P2 and SRV. Furthermore, there is no need for the providers X and consumers Y to install special programs in their own terminal computers P1 and P2; for example, the system may be devised so that an all-purpose application such as a browser, etc., can be utilized.

Next, the various means described above will be described with reference to Figures 20 through 24.

The provider input supporting means 1 receives transmitted offer condition data from the terminal computer P1 on the provider side utilizing the input means 11 (keyboard 101, etc.) and offer condition transmitting means 12 (communications interface 107, etc.), and accumulates this data in the offer condition accumulating section D1 set in the memory device 106 of the server computer SRV. Furthermore, the consumer input supporting means 2 receives transmitted purchase condition data from the terminal computer P2 on the consumer side utilizing the input means 21 (keyboard 101, etc.) and purchase condition transmitting means 22 (communications interface 107, etc.), and accumulates this data in the purchase condition accumulating section D2 set in the memory device 106 of the server computer SRV. Furthermore, the system may be devised so that the above-described respective types of condition data are received by FAX or mail from the product provider X and consumer Y, and so that a facility manager, etc., who receives this data inputs the data directly into the server computer SRV. The roles of the provider input supporting means 1 and consumer input supporting means 2 in such a case include input means (keyboard 101, etc.) for the server computer SRV.

Here, specified goods or services may be indicated in some cases in comprehensive terms by means of the minimum required ordinary name in transactions, e.g., as "television"; in other cases, such goods or services may be indicated in more concrete terms, with a plurality of items being entered, as in "Model 25 liquid crystal television manufactured by Company X".

The automatic extraction means 3 is a means which extracts data indicating the desired period for offer or desired period for purchase including the determination date and time from the above-described offer condition data and purchase condition data at a predetermined time and date for determination, i.e., at limit time. In the present embodiment, this limit time is automatically and successively updated at fixed intervals.

The matching means 4 compares the offer condition data and purchase condition data extracted by the above-described automatic extraction means 3, and combines providers X and consumers Y so that the offer prices and purchase prices are the same, or so that the purchase prices are higher than the offer prices.

The buying and selling supporting means 5 provides support so that the buying and selling of the above-described specified goods or services are accomplished between the providers X and consumers Y whose combinations have been determined by the above-described matching means 4, in accordance with the offer prices and purchase prices respectively submitted by these providers X and consumers Y.

The difference managing means 6 manages the differences between the purchase prices and offer prices that are generated by the buying and selling performed utilizing the above-described buying and selling supporting means 5.

One example of the flow leading to the completion of transactions involving specified goods utilizing the facility constructed as described above will be briefly described below.

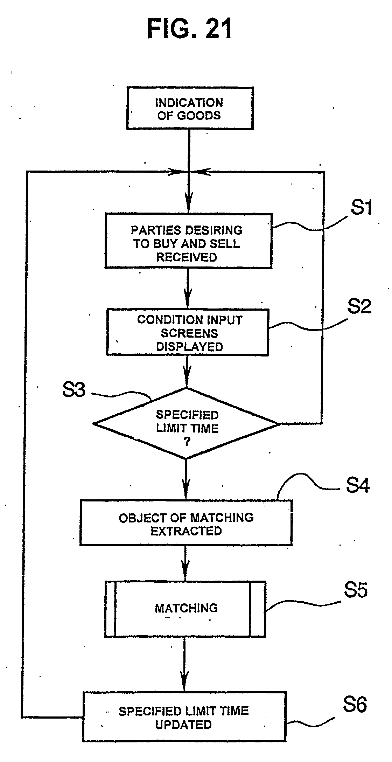

A provider X logs in from his own terminal computer P1; then, while viewing a specified offer condition input screen, this provider X inputs offer conditions including the offer price and desired period for offer concerning a specified product, e.g., a personal computer, offered by the provider X (step S1 to step S3 in Figure 21). In this case, the system is devised so that reference can be made to various types of information, e.g., individual transaction settling prices or average prices, etc., relating to this product in the past, by means of a condition reference means (not shown).

Meanwhile, a consumer Y also similarly logs in from his own terminal computer P2; then, while viewing a specified purchase condition input screen, this consumer Y inputs purchase conditions including the purchase price and desired period for purchasing (step S1 to step S3 in Figure 21). In this case, the system is devised so that reference can be made to various types of information, e.g., individual transaction settling prices or average prices, etc., relating to this product in the past, by means of a condition reference means (not shown). Furthermore, in addition to cases in which the desired period for offer and the desired period for purchasing are periods in which the completion of the transaction is determined, there may be cases in which these periods include the period within which the product is actually shipped from the provider, or the period within which the product is actually delivered to the consumer.

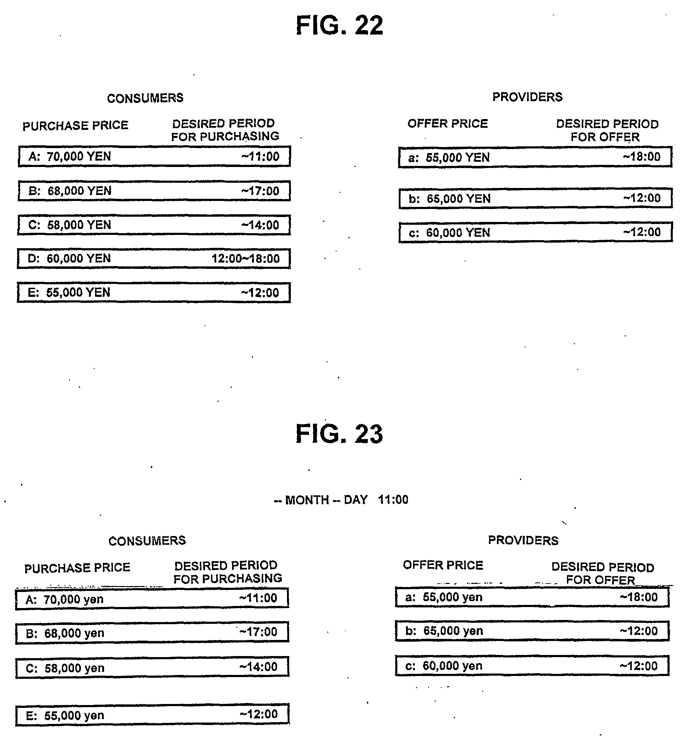

Here, as one example to, it is assumed that five sets of purchase condition data A, B, C, D and E have been entered for a personal computer constituting the product in question, and that three sets of offer condition data a, b and c have been entered for the same product, as shown in Figure 22. Furthermore, among these data sets A through E and a through c, those data sets that show only the final time of the desired period are data sets that limit only the desired deadline.

Then, when the specified limit time (e.g., 11:00 AM) is reached, the offer condition data and purchase condition data indicating desired periods for offer or purchasing that include this limit time are extracted by the automatic extraction means 3 (step S4 and step S5 in Figure 21). Here, the desired period for purchasing indicated by D is 12:00 to 18:00; accordingly, this data set is excluded, and the purchase condition data sets A, B, C and E and offer condition data sets a, b and c are extracted.

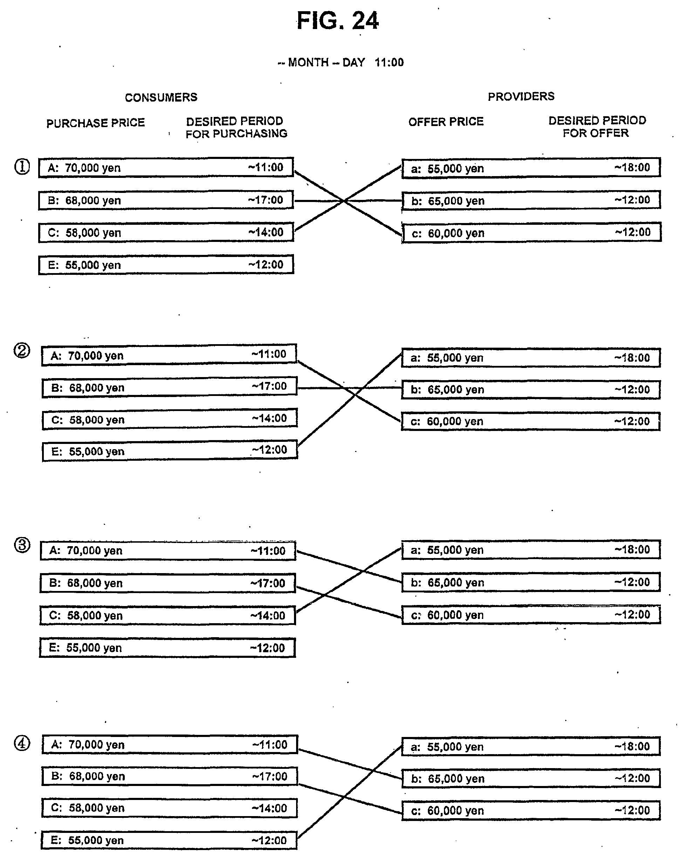

Next, these offer condition data sets and purchase condition data sets are compared by the matching means 4, and the providers X and consumers Y are combined so that the offer prices and purchase prices are the same, or so that the purchase prices are higher than the offer prices. In this case, since a plurality of different methods of combination exist, it is necessary to select the method of combination that is to be used. Accordingly, in the present embodiment, the matching means 4 is equipped with a combination method setting means 41 which determines this method of combination from at least the submitted conditions in accordance with a fixed order of preference. For example, in the present embodiment, the combination method setting means assigns greatest priority to obtaining the maximum number of combinations. Accordingly, as shown in Figure 24 (1) through (4), the combination method is calculated in four ways. Then, one combination (e.g., (3)) is selected from this set using various priority conditions such as order of entry or size of submitted price, etc.

Then, support is provided by the buying and selling supporting means 5 so that buying and selling of the specified goods or services in question are transacted between the providers X and consumers Y for which the above-described combinations have been determined, in accordance with the offer prices and purchase prices respectively submitted by these providers and consumers. In concrete terms, settling procedures and shipping procedures are automatically performed.

Furthermore, the differences between the purchase prices and offer prices generated by these transactions are appropriated to, for example, the management of the system by the above-described difference managing means 6; however, it would also be possible to devise the system so that these differences are split among the system management, the above-described consumers Y and the above-described providers X, or so that the differences are split between the above-described consumers Y and the above-described providers X.

Meanwhile, the system is devised so that the offer condition data and purchase condition data that were not extracted by the above-described automatic extraction means 3, or for which combination partners were not selected by the matching means 4, are again taken as the object of selection by the automatic extraction means 3 in the next limit time.

Furthermore, in the present embodiment, the system is devised so that the consumers Y and providers X learn of their transaction partners only when a transaction has been completed, but cannot ascertain the prices submitted by their transaction partners. Furthermore, the system is devised so that when the consumers Y and providers X input purchase prices or offer prices, these consumers Y and providers X cannot ascertain individual information regarding the conditions submitted by other consumers Y and other providers X. Thus, the use of a double-closed system in which the providers X and consumers Y can ascertain only partners who have completed a transaction is the same as in the first embodiment; other constructions of the first embodiment may also be applied to the second embodiment.

### <Third Embodiment>

The third embodiment of the present invention will be described below with reference to the accompanying drawings.

The transaction supporting facility in this embodiment is used to support and promote general commercial transactions. Like the first embodiment, this embodiment is constructed on a network formed by connecting terminal computers P1 and P2 respectively installed on the side of providers X and consumers Y and a server computer SRV that forms a computer system via a communications circuit such as the Internet, etc., as shown in Figure 9.

Here, the meanings of "providers X" and "consumers Y", and the procedures used in the registration of these providers and consumers, etc., are the same as in the second embodiment; accordingly, a description is omitted. Furthermore, the devices used to construct this transaction supporting facility are also the same as in the second embodiment; accordingly, a description is likewise omitted.

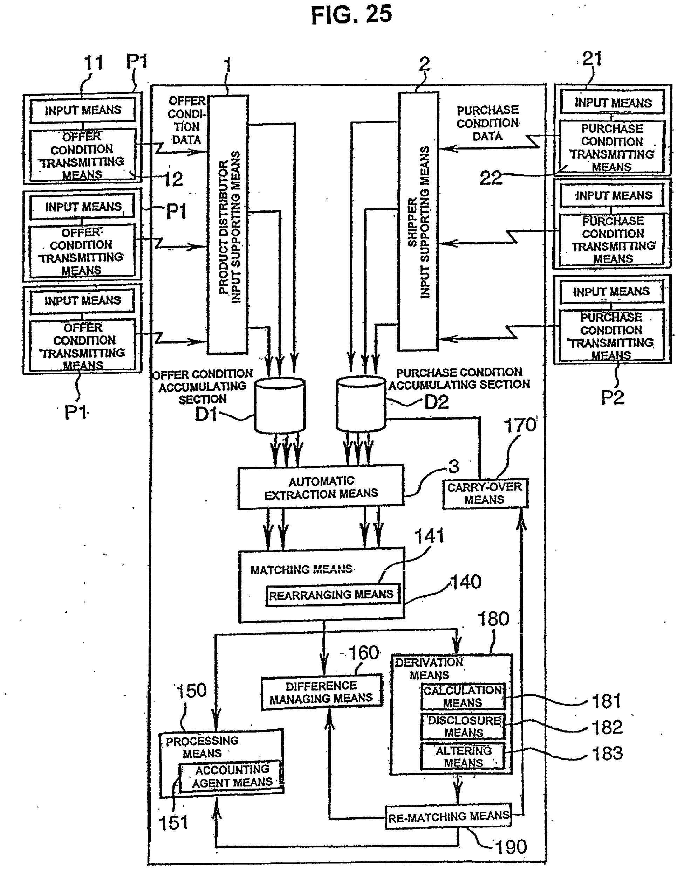

In this embodiment, the system is devised so that at least the functions of a provider input supporting means 1 which constitutes a offer condition receiving means, a consumer input supporting means 2 which constitutes a purchase condition receiving means, an automatic extraction means 3, a matching means 140, a buying and selling supporting means 150, a difference managing means 160, a carry-over means 170, a derivation means 180 and a re-matching means 190, etc., are performed as shown in Figure 25 by the operations of the CPUs 103 and peripheral devices in the above-described terminal computers P1 and P2 and server computer SRV in accordance with specified programs stored in the memory devices 106 of these computers P1, P2 and SRV. Furthermore, there is no need for the providers X and consumers Y to install special programs in their own terminal computers P1 and P2; for example, the system may be devised so that an all-purpose application such as a browser, etc., can be utilized.

Next, the various means described above will be described with reference to Figures 25 through 31.

First, the provider input supporting means 1, input means 11, offer condition transmitting means 12, consumer input supporting means 2, input means 21, purchase condition transmitting means 22, offer condition accumulating section D1, purchase condition accumulating section D2 and automatic extraction means 3 are the same as in the above-described second embodiment; accordingly, a description of these parts is omitted.

The matching means 140 is a means which compares the offer condition data and purchase condition data extracted by the above-described automatic extraction means 3, and combines providers X and consumers Y so that the offer prices and purchase prices are the same, or so that the purchase prices are higher than the offer prices. In concrete terms, this matching means 140 has a rearranging means 141 that rearranges a plurality of offer condition data sets and purchase condition data sets according to specified rules. Specifically, in the case of offer condition data, this rearranging means 141 rearranges the data in order from the lowest submitted offer price, and in the case of purchase condition data, the rearranging means 141 rearranges the data in order from the highest submitted purchase price. Furthermore, these respective condition data sets that have been rearranged are respectively extracted in equal numbers from the top, and the results obtained by respectively calculating the total prices extracted are compared. Such a procedure is repeated until the total purchase prices obtained by totaling the respective purchase condition data sets are the same as or higher than the total offer prices obtained by totaling the respective offer condition data sets, and these offer condition data sets and purchase condition data sets are combined. The respective condition data sets combined here are processed in the buying and selling supporting means 150 described next, while the respective condition data sets that could not be combined are processed in the derivation means 180 described later.

The buying and selling supporting means 150 is a means which provides support so that the buying and selling of the above-described specified goods or services are performed between providers X and consumers Y whose combinations have been determined by the above-described matching means 4 and the re-matching means 190 described later, in accordance with the offer prices and purchase prices respectively submitted by these providers X and consumers Y. This means has an accounting agent means 151 similar to that of the above-described first and second embodiments.

The difference managing means 160 is a means which manages the differences between purchase prices and offer prices generated by the buying and selling performed utilizing the above-described buying and selling supporting means 5.

The derivation means 180 is a means which derives combination re-formation information used to re-form combinations which are such that the total amount of the purchase prices and the total amount of the offer prices are the same, or so that the total amount of the purchase prices is higher than the total amount of the offer prices, for offer condition data sets and purchase condition data sets that could not be successfully matched in the above-described matching means 140. Here, as re-formation information, this derivation means derives information that suggests the monetary reasons that the offer condition data and purchase condition data could not be matched.

In order to derive such monetary reasons, the derivation means 180 in the present embodiment is equipped with a calculating means 181, a disclosure means 182 and an altering means 183.

First, the calculating means 181 is a means which calculates the average value of the offer prices (i.e., the average offer price) and the average value of the purchase prices (i.e., the average purchase price) for the respective offer condition data sets and purchase condition data sets that could not be successfully matched in the matching means 140.

Next, the disclosure means 182 is a means which discloses the average offer price calculated by the calculating means 181 only to the providers X who could not be successfully matched, and which similarly discloses the average purchase price only to the consumers Y who could not be successfully matched. In this disclosure, a method in which the above-described calculated results are transmitted in the form of e-mail, etc., from the server computer SRV to the respective terminal computers P1 and P2 is most convenient; however, in cases where the respective terminal computers P1 and P2 are facsimile machines or telephones (including cellular phones), a method in which the above-described calculated results are output to various types of peripheral devices, such as printing on paper via a printer, etc., on the side of the server computer SRV, and the providers X and consumers Y are informed on this basis, may also be used. In this case, even if the operator or manager of the server computer SRV knows the calculated results, such persons would presumably have a fixed obligation to maintain confidentiality, so that such an arrangement is considered to be included in the sense of "disclosure only to providers X and consumers Y".

Furthermore, the altering means 183 is a means that receives the altered offer prices or purchase prices in cases where the providers X or consumers Y alter the offer prices or purchase prices on the basis of information disclosed by the disclosure means 182. When the providers X or consumers Y alter the offer prices or purchase prices, the input means 11 and 12 2l and the condition transmitting means 12 and 22 can be used in the same manner as when the offer condition data and purchase condition data were initially entered. Furthermore, the altered offer prices and purchase prices that are transmitted are accumulated in the respective condition accumulating sections D1 and D2 as the corresponding offer condition data and purchase condition data. Moreover, it is not absolutely necessary that the offer prices and purchase prices that are to be altered by the providers X and consumers Y be equal to the calculated results that are disclosed by the disclosure means; these prices may be arbitrarily determined by the respective providers X and consumers Y using the above-described results as a reference. In extreme cases, it may also be decided not to alter the prices. In such cases, the alteration amount is set as 0, and the original offer prices and purchase prices are treated as the offer prices and purchase prices following alteration.

Furthermore, the system may also be devised so that only the average offer price or the average purchase price is calculated in the calculating means 181. In such cases, the system may be devised so that only the result on the calculated side is disclosed to only the provider X or consumer Y who submitted the condition data in question. Furthermore, the system may also be devised so that the disclosure means 182 not only informs the providers X or consumers Y of the calculated results obtained by the calculating means 181, but also informs these parties of prices determined from these calculated results by specified calculation formulae (including tables), or prices determined by specified calculation formulae using the calculated results and offer prices or purchase prices that could not be successfully matched as parameters. The same is true of the altering means 183.

The re-matching means 190 is a means which compares offer condition data and purchase condition data for which transactions could not be successfully completed by the matching means 140 on the basis of information derived by the above-described derivation means 180, i.e., altered offer prices and purchase prices altered by the above-described altering means, and which combines these respective condition data sets by the same procedure as the above-described matching means 140. Specifically, the re-matching means 190 has, though not shown, a rearranging means similar to that of the matching means 140. The offer condition data and purchase condition data combined by this re-matching means 190 are processed by the processing means 150 and difference managing means 160 as described above.

The carry-over means 170 is a means which is devised so that offer condition data and purchase condition data that could not be successfully matched even by the re-matching means 190 are automatically re-added to the object of extraction of the above-described automatic extraction means 3 until the desired deadline for the determination of matching of such data has elapsed. The basic operating procedure of this means is the same as that of the carry-over means 7 in the first embodiment.

One example of the flow leading to the completion of transactions involving specified goods utilizing the present facility constructed as described above will be described below.

A provider X logs in from his own terminal computer P1; then, while viewing a specified offer condition input screen, this provider X inputs offer conditions including the offer price and desired period for offer concerning a specified product, e.g., a personal computer, offered by the provider X (step S1 to step S3 in Figure 21). Meanwhile, a consumer Y also similarly logs in from his own terminal computer P2; then, while viewing a specified purchase condition input screen, this consumer Y inputs purchase conditions including the purchase price and desired period for purchasing (step S1 to step S3 in Figure 21). In this case, the system is devised so that reference can be made to various types of information, e.g., individual transaction settling prices or average prices, etc., relating to this product in the past, by means of a condition reference means (not shown), as in the above-described second embodiment. Furthermore, the meanings of the desired period for offer and desired period for purchasing are also the same as in the above-described second embodiment.

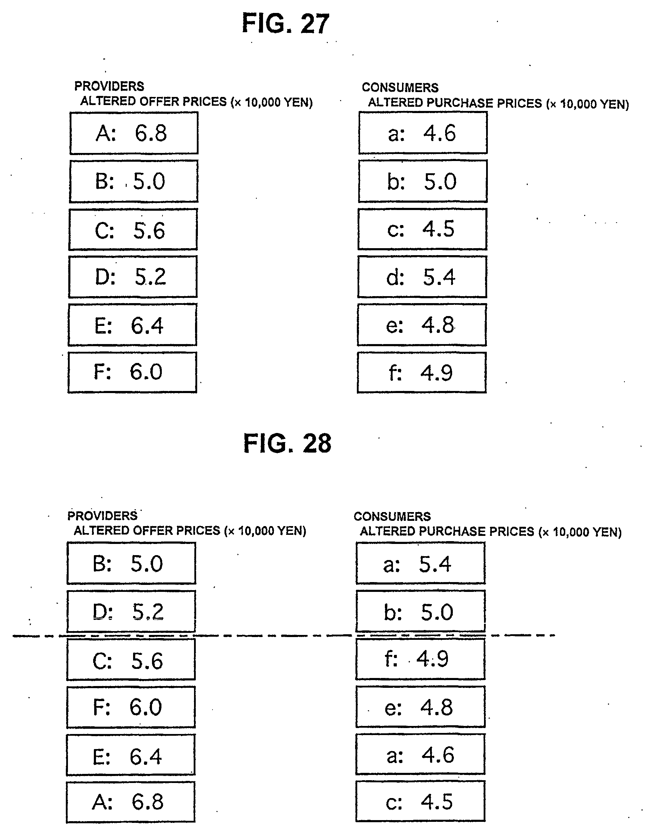

Here, as one example to facilitate understanding, a case will be described in which offer condition data and purchase condition data have been entered by numerous providers X and consumers Y for a personal computer (not shown) constituting the product in question, and six sets of offer condition data A, B, C, D, E and F and six sets of purchase condition data a, b, c, d, e and f have been extracted from the above-described data by the automatic extraction means 3, as shown in Figure 27. Specifically, these data sets A through F and a through f are data sets that satisfy the specified desired deadline for the determination of matching.

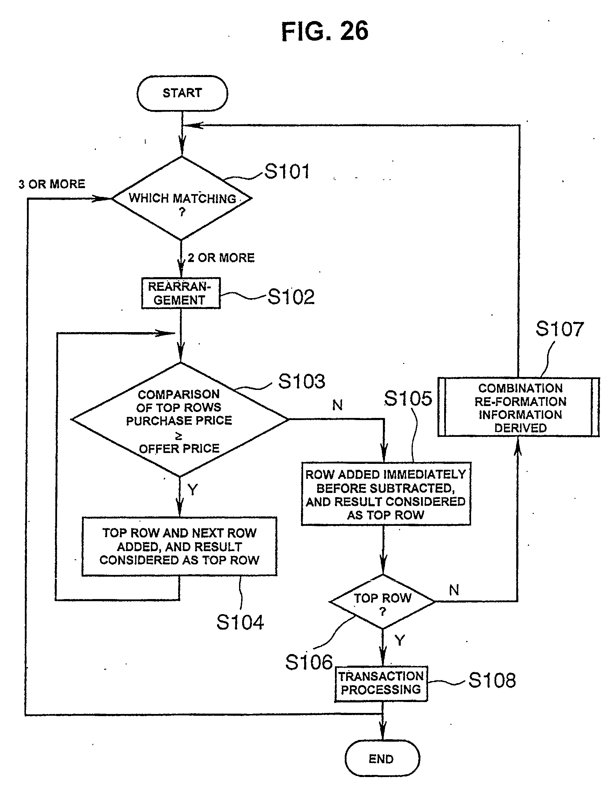

Furthermore, when the specified limit time is reached, matching is initiated by the matching means 140. First, the number of times of this matching (the number of the current matching) is detected. In cases where the matching is the first matching, the above-described respective condition data sets are rearranged for each offer condition data set and each purchase condition data set by the rearranging means 141 (step S101 and step S102 in Figure 26). Here, for example, as shown in Figure 28, the offer condition data sets are arranged in order with the data set including the lowest offer price at the beginning, and the purchase condition data are arranged in order with the data set including the highest purchase price at the beginning.

Next, the offer condition data sets and purchase condition data sets that have been rearranged are compared with each other, starting with the first row. In concrete terms, when the offer price indicated by B and the purchase price indicated by d are compared, since the purchase price (54,000 yen) is higher than the offer price (50,000 yen) (step S103 in Figure 26; Y), these offer condition data and purchase condition data can be matched, and the offer price and purchase price in the next rows are respectively added to the offer price and purchase price in this first row, so that these prices are considered to be a new first row (step 104 in Figure 26). Then, when the data sets in the new first row are similarly compared with each other, since the total (104,000 yen) of the purchase prices indicated by d and b is higher than the total (102,000 yen) of the offer prices of B and D (step S103 in Figure 26; Y), the offer price and purchase price in the next row are again added to this first row, and are considered to be a new first row (step S104 in Figure 26). This time, however, since the total (153,000 yen) of the purchase prices indicated by d, b and f constituting the new first row is lower than the total (158,000 yen) of the offer prices of B, D and C (step S103 in Figure 26; N), the third row added in this case is subtracted from these totals, and the previous first row is used (step S105 in Figure 26). Here, offer condition data indicated by B and D and the purchase condition data indicated by d and b, considered as the first row, are processed in the processing means 150 so that a transaction is completed, and the difference between the data sets (4,000 yen) (104,000 - 102,000 yen)) is managed in the difference managing means 160 (step S108 in Figure 26). Furthermore, two possible combinations of B and D with d and b are conceivable. However, it may be envisioned that the product for which a higher offer price is indicated is ordinarily a higher quality product; accordingly, if both price and quality are taken into account, it is desirable to adopt a combination of the higher prices with each other (D and d) and a combination of the lower prices with each other (B and b).

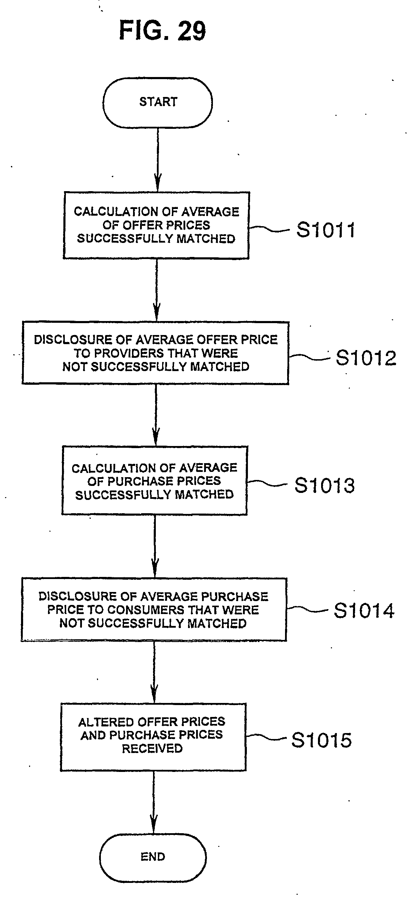

Meanwhile, the respective condition data sets that could not be successfully matched in the above-described step S105 are processed in the above-described derivation means 180 for re-matching in the re-matching means 190 (step S107 in Figure 26). In more concrete terms, first, as shown in Figure 29, the average (51,000 yen) of the offer prices that could be successfully matched in the above-described matching means 140 is calculated by the calculating means 181 (step S1011 in Figure 29). This calculated average offer price is disclosed by the disclosure means 182 to the respective providers X who submitted the offer condition data that could not be successfully matched (step S1012 in Figure 29). Meanwhile, the average (52,000 yen) of the purchase prices that could be successfully matched is calculated by the calculating means 181 (step S1013 in Figure 29), and this calculated average purchase price is disclosed by the disclosure means 182 to the respective consumers who submitted the purchase condition data that could not be successfully matched (step S1014 in Figure 29). Furthermore, these procedures are not limited to the procedures described above, as long as the calculation and disclosure of the respective average prices are performed in this order. Moreover, if offer prices and purchase prices respectively altered by the providers X and consumers Y on the basis of the respective average prices that are disclosed are received (step S1015 in Figure 29), the offer condition data and purchase condition data corresponding to these respective altered prices are altered by the above-described altering means 183.

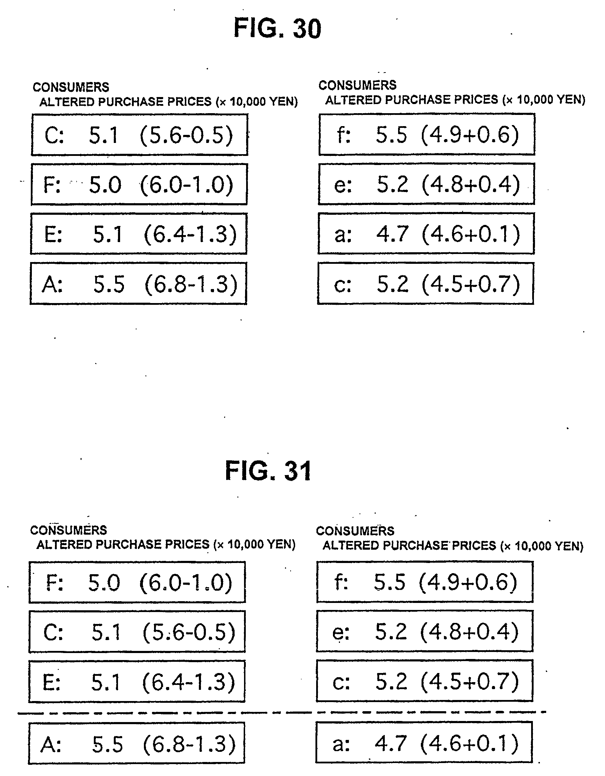

Here, for example, altered offer prices and purchase prices received from the respective providers X and consumers Y are shown in Figure 30. The providers X have reduced the initially submitted offer prices in order to cause these prices to approach 51,000 yen, which is the average offer price submitted; however, some of the altered prices agree with the above-described average offer prices, while others are higher or lower. Similarly, the consumers Y have increased the initially submitted purchase prices in order to cause these prices to approach 52,000 yen, which is the average purchase price submitted; however, some of the altered prices agree with the above-described average purchase price, while others are higher or lower. The numerical expressions shown in parentheses are the formulae that were used by the respective parties to add to or subtract from the initially submitted price at the time of alteration in order to calculate the altered price. Then, re-matching is performed by the re-matching means 190 using these altered offer prices and purchase prices. Prior to this, since this matching is the second matching counting from the matching performed by the above-described matching means 140 (step S101 in Figure 26), the respective condition data sets including these altered prices are arranged in order as shown in Figure 31, with the data set that includes the lowest offer price listed first in the case of offer condition data, and with the data set that includes the highest purchase price listed first in the case of purchase condition data (step S102 in Figure 26). Furthermore, in cases where a plurality of offer condition data sets or a plurality of purchase condition data sets have been altered to the same offer or purchase price (e.g., C and E, and c and e), various methods might conceivably used in order to determine which data set is listed first. In the present embodiment, however, the system is arranged so that this order is determined according to the size of the amount initially submitted (the smaller price in the case of offer prices, and the larger price in the case of purchase prices). Besides this method, methods such as arranging the prices in order of earlier entry or alteration, or assigning a rank in accordance with compensation of the altered amount, etc., are also conceivable.

When the offer condition data and purchase condition data that have thus been rearranged are compared by repeating step S103 and step S104 (Figure 26) as described above, the total purchase price exceeds the total offer price up to the third row; however, in the fourth row, the total offer price exceeds the total purchase price. Accordingly, the totals obtained up to the third row are placed at the head of the listing (step S105 in Figure 26), and re-matching is accomplished for these offer condition data seta (F, C and E) and purchase condition data sets (f, e and c) (step S106 and step S108 in Fig. 26). Meanwhile, it is considered that re-matching was unsuccessful in the case of the offer condition data (A) and purchase condition data (a) of the fourth row. The combination of data sets that were successfully matched can be accomplished by the same method as that used for data sets that were successfully matched in the initial matching. Furthermore, the difference between the total offer price and total purchase price generated by this re-matching is also managed by the difference managing means 160.

Furthermore, such matching and re-matching by means of such a procedure can be repeated any number of times by again going through the processing of step S107, so that the initially submitted offer condition data and purchase condition data are combined to the maximum extent possible. In the present embodiment however, re-matching is performed only once, i.e., matching is performed only twice including the initial matching, in order to accomplish matching more quickly, and in order to simplify the description. Accordingly, in the case of A and a, in which offer condition data and purchase condition data that could not be successfully matched even by the re-matching means 190 were submitted, these data are viewed as a case in which there was ultimately no successfully completed transaction in this entry. These condition data sets are added by the carry-over means 170 to the next object of extraction by the automatic extraction means 3, as long as this is permitted by the desired deadlines for the determination of matching in these condition data sets.

Thus, in the present embodiment, the system is devised so that even in cases where the total amount of the initially submitted offer prices is higher than the total amount of the purchase prices, matching is successfully accomplished by first performing an extraction from these prices so that the total amount of the purchase prices is the same as or higher than the total amount of the offer prices; furthermore, the system is devised so that providers X and consumers Y who could not be successfully matched are informed for reference of the average values of transaction prices that were previously successfully matched, and so that re-matching is accomplished at prices corrected using these average prices as a guide. Accordingly, a large number of transactions can be accomplished relatively easily at fair prices. In other words, in the case of providers X who desire transactions at lower prices and consumers Y who desire transactions at higher prices, the possibility of realizing successful transactions in an early stage can be increased. On the other hand, in the case of providers X who desire transactions at higher prices and consumers Y who desire transactions at lower prices, some extra time is required before transactions can be successfully completed; however, the possibility of completing transactions at the desired prices can be increased by correcting the submitted prices.

Furthermore, in such a method, there may be instances in which matching is successfully completed even in cases where unreasonable prices are submitted (for example, excessively low offer prices or excessively high purchase prices). Accordingly if all or part of the algorithms used up to the completion of matching are disclosed in advance, the participation of parties submitting unfair prices can be excluded, so that the completion of transactions that are satisfactory to both sides can be expected by the participation of well-intentioned providers X and consumers Y who submit fairer prices. Furthermore, in the present embodiment, the system is devised so that consumers Y and providers X can ascertain their transaction partners when a transaction has been completed, but cannot ascertain the prices submitted by their transaction partners. Furthermore, the system is devised so that when consumers Y and providers X input purchase prices or offer prices, or altered amounts for these prices, these consumers Y and providers X cannot ascertain individual information concerning the conditions submitted by other consumers Y or providers X. This use of a double-closed auction system in which providers X and consumers Y can ascertain only partners that have completed a transaction is the same as in the first and second embodiments, and other constructions of the first and second embodiments may also be applied.

Furthermore, in the present embodiment, in the case of offer condition data and purchase condition data that could not be successfully matched in the initial matching, the monetary reasons used to complete matching are in particular not limited to those described above, and may be variously altered. As concrete examples, modifications 1 through 3 of the present embodiment will be briefly described below. Furthermore, in these respective modifications, the procedures other than the derivation procedure (Figure 26) for combination re-formation information performed by the derivation means 180, and the constructions of the respective elements (Figure 25) are the same as in the above-described third embodiment; accordingly, a description of these procedures and parts is omitted. Moreover, in the following descriptions, the offer prices and purchase prices initially submitted by the providers X and consumers Y, and the respective condition data sets that were successfully matched by the matching means 140 and respective condition data sets that were not successfully matched by the matching means 140 following rearrangement, are the same as those shown in Figures 27 and 28.

### <<First Modification>>

This modification is devised so that in the case of offer condition data and purchase condition data that could not be successfully matched by the matching means 140 (step S106 in Figure 26; N), both parties are caused to make a compromise in terms of monetary amounts, in regard to the difference between the total amounts of the respective prices, that is equal for both parties.

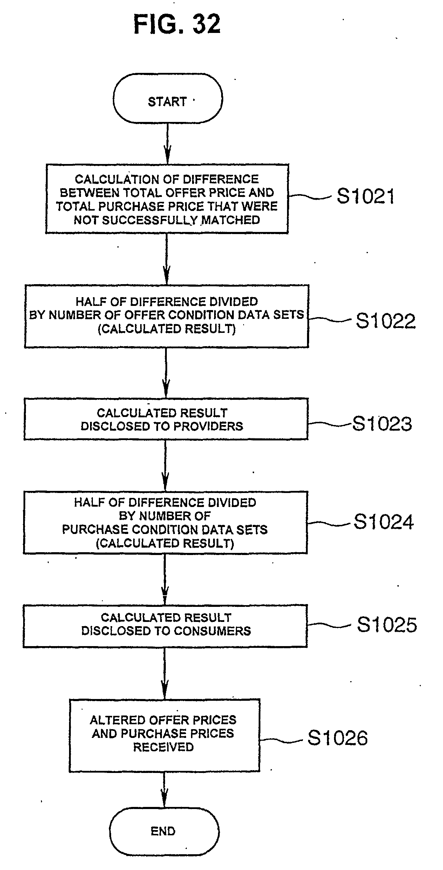

First, as shown in Figure 32, the difference between the total offer price and the total purchase price is calculated by the calculation means 181 (step S1021 in Figure 32). In concrete terms, as shown in Figure 28, the total offer price is 248,000 yen, which is the total amount of the offer prices indicated by C, F, E and A, and the total purchase price is 188,000 yen, which is the total of the purchase prices indicated by f, e, a and c. Accordingly, the difference is calculated as 60,000 yen.

Next, the following processing is performed in order to distribute this difference in a fair and equal manner among the providers X and consumers Y that were not successfully matched. Specifically, a monetary amount obtained by dividing half of the above-described difference (30,000 yen) by the number of providers (four in this case) is calculated (step S1022 in Figure 32). The result of this calculation (7,500 yen) is disclosed to these respective providers X by the above-described disclosure means 182 (step S1023 in Figure 32). Meanwhile, a monetary amount obtained by dividing half of the above-described difference (30,000 yen) by the number of consumers (four in this case) is calculated (step S1024 in Figure 32), and the result of this calculation (7,500 yen) is disclosed to these respective consumers Y by the above-described disclosure means 182 (step S1025 in Figure 32). Furthermore, the method used to disclose these amounts is the same as that used in the above-described third embodiment. Moreover, it would also be possible to devise the system so that other calculated results calculated by some other calculation formula on the basis of the calculated results produced by the above-described calculation means 181 are disclosed as the calculated results.

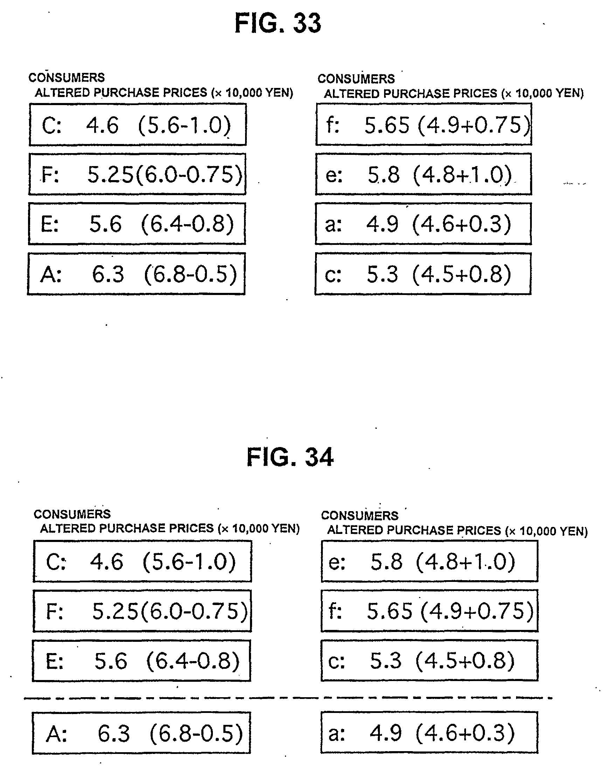

Then, when the respective providers X and consumers Y alter the offer prices and purchase prices on the basis of the disclosed information, these altered offer prices and purchase prices are received by the altering means 183 (step S1026 in Figure 32). Figure 33 shows the altered offer prices and purchase prices that are received for each provider X and consumer Y. The numerical expressions shown in parentheses are the formulae that were used by the respective parties to add to or subtract from the initially submitted price at the time of alteration in order to calculate the altered price. Accordingly, the altered prices are not limited to monetary amounts showing compromise according to the above-described disclosed monetary amount (7,500 yen).

Then, the respective condition data sets including these altered prices are rearranged in order as shown in Figure 34 by the rearranging means 141, with the data including the lowest offer price listed first in the case of offer condition data, and with the data including the highest purchase price listed first in the case of purchase condition data (step S102 in Figure 26). Re-matching is performed by the re-matching means 190 using these altered offer prices and purchase prices (step S103 through step S106 in Figure 26). The procedure of this re-matching is the same as in the above-described third embodiment; accordingly, a description of this procedure is omitted. However, to show only the results using Figure 34, matching was successfully completed for the offer condition data (C, F, E) and purchase condition data (e, f, c) up to the third row, and matching was not successfully completed in the fourth row (A and a).

### << Second Modification>>

This modification is also devised so that in the case of offer condition data and purchase condition data that could not be successfully matched by the matching means 140 (step S106 in Figure 26; N), prices that are weighted in accordance with the initially submitted prices are disclosed to the respective parties using the difference between the total amounts of the prices, so that the parties are caused to make a compromise in terms of the monetary amounts involved.

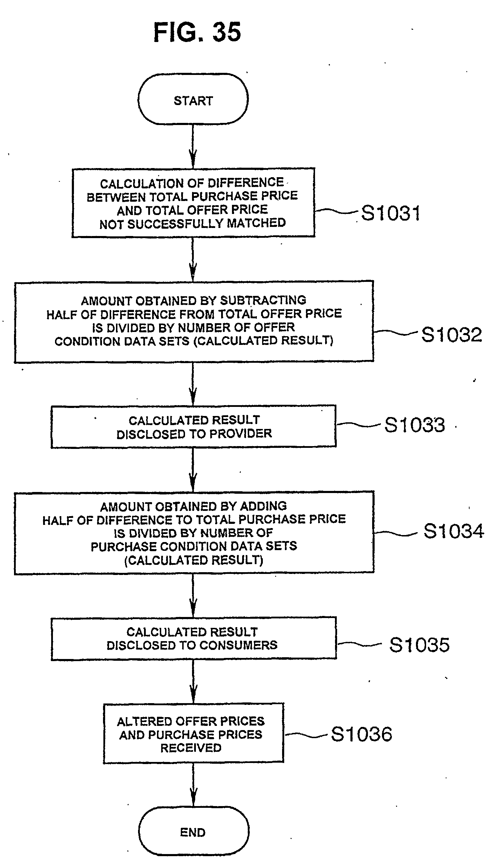

First, as shown in Figure 35, the difference between the total offer price and total purchase price is calculated by the calculation means 181 (step S1031 in Figure 35). In concrete terms, the difference is calculated as 60,000 yen as in the above-described first modification.

Next, the following processing is performed so that this difference is distributed fairly among the providers X and consumers Y that were not successfully matched. Specifically, a monetary amount which is obtained by subtracting half of the above-described difference (30,000 yen) from the total offer price of the offer condition data that could not be successfully matched, and dividing the resulting amount by the number of providers (four in this case) is calculated (step S1032 in Figure 35). The result of this calculation (54,500 yen) is disclosed to these respective providers X by the above-described disclosure means 182 (step S1033 in Figure 35). Meanwhile, a monetary amount which is obtained by adding half of the above-described difference (30,000 yen) to the total purchase price of the purchase condition data that could not be successfully matched, and dividing the resulting amount by the number of consumers (four in this case) is calculated (step S1024 in Figure 35), and the result of this calculation (54,500 yen) is disclosed to these respective consumers Y by the above-described disclosure means 182 (step S1034 in Figure 35). Furthermore, the method used to disclose these amounts is that same as that used in the above-described third embodiment. Moreover, it would also be possible to devise the system so that other calculated results calculated by some other calculation formula on the basis of the calculated results produced by the above-described calculation means 181 are disclosed as the calculated results. By thus disclosing the respective calculated results, it can be suggested that the probability of completing a transaction will be increased by compromising on a monetary amount at a low price for providers X who initially submitted a low offer price, and it can similarly be suggested that the probability of completing a transaction will be increased by compromising on a monetary amount at a low price for consumers Y who initially submitted a high purchase price. It goes without saying that in order to allow the successful completion of a transaction by parties that initially submitted a high offer price or low purchase price, it is necessary to increase or decrease the price by a correspondingly large amount.

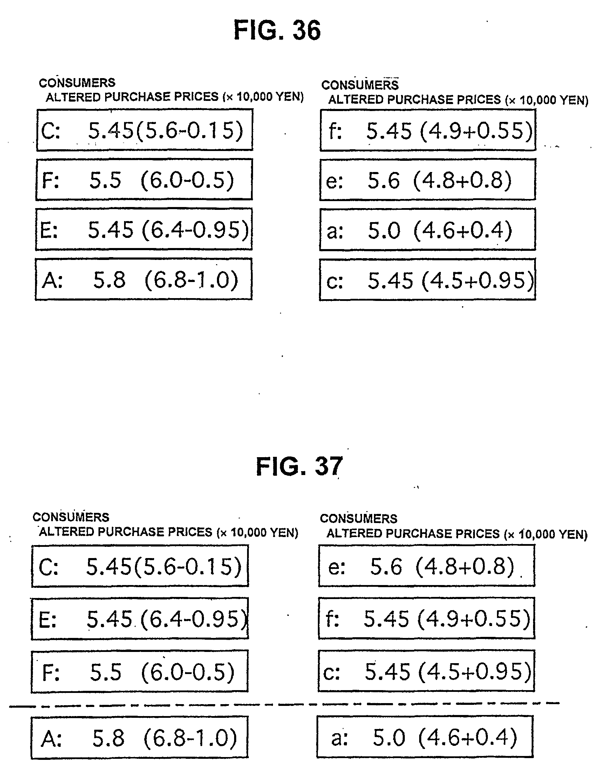

Then, when the respective providers X and consumers Y alter the offer prices and purchase prices on the basis of the disclosed information, the altered offer prices and purchase prices are received by the altering means 183 (step S1036 in Figure 35). Figure 36 shows the altered offer prices and purchase prices received for each provider X and consumer Y. The numerical expressions shown in parentheses are the formulae that were used by the respective parties to add to or subtract from the initially submitted price at the time of alteration in order to calculate the altered price. Accordingly, the altered prices are not limited to monetary amounts showing compromise according to the above-described disclosed monetary amount (54,500 yen).

Then, the respective condition data sets that include these altered prices are rearranged by the rearranging means 141 as shown in Figure 37 according to the same rules as those used in the above-described first modification (step S102 in Figure 26), and re-matching is performed by the re-matching means 190 using these altered offer prices and purchase prices (step S103 through step S106 in Figure 26). The procedure of this re-matching is the same as in the above-described third embodiment; accordingly, a description is omitted here. However, to show only the results using Figure 37, matching was successfully completed for the offer condition data (C, E, F) and purchase condition data (e, f, c) up to the third row, and matching was not successfully completed in the fourth row (A and a).

### <<Third Modification>>

This modification is devised so that calculated results based on the lowest offer price among the offer condition data that was successfully matched and the highest purchase prices among the purchase condition data that was successfully matched are disclosed to providers X and consumers Y who could not be successfully matched by the matching means 140, and re-matching is accomplished at prices close to these prices. Furthermore, any values may be used as the disclosed prices as long as these values are prices that were successfully matched; in the present modification, however, prices of the type described above are disclosed in order to increase the probability of successful matching by the re-matching means 190. Furthermore, a case in which the average offer price and average purchase price that were successfully matched are disclosed is described in detail in the above-described third embodiment.

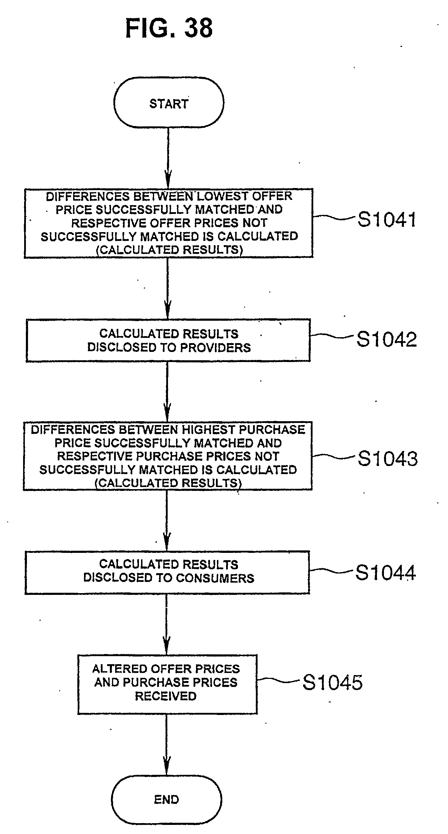

In the present embodiment, first, as shown in Figure 38, the differences between the lowest offer price (50,000 yen; see Figure 28) that was successfully matched by the matching means 140 and the respective offer prices that could not be successfully matched are calculated by the calculation means 181 (step S1041 in Figure 38). Then, the above-described differences constituting the results calculated by the calculation means 181 are disclosed only to the above-described providers X (step S1042 in Figure 38). Meanwhile, the differences between the highest purchase price (54,000 yen; see Figure 28) that was successfully matched and the respective purchase prices that could not be successfully matched are calculated by the calculation means 181 (step S1043 in Figure 38), and the above-described differences constituting the results calculated by the calculation means 181 are disclosed only to the above-described consumers Y (step S1044 in Figure 38). In concrete terms, for example, the difference between B, which indicated the lowest offer price (50,000 yen), and the offer price (56,000 yen) indicated by C, which could not be successfully matched, is 6,000 yen. Accordingly, this amount is disclosed to C. Meanwhile, the difference between d, which indicated the highest purchase price (54,000 yen), and the purchase price (46,000 yen) indicated by a, which could not be successfully matched, is 8,000 yen; accordingly, this amount is disclosed to C. The system is devised so that these amounts are disclosed to the respective providers X and consumers Y, thus urging the providers X to decrease their offer prices by the respective differences, and urging the consumers Y to increase their purchase prices by the respective differences.

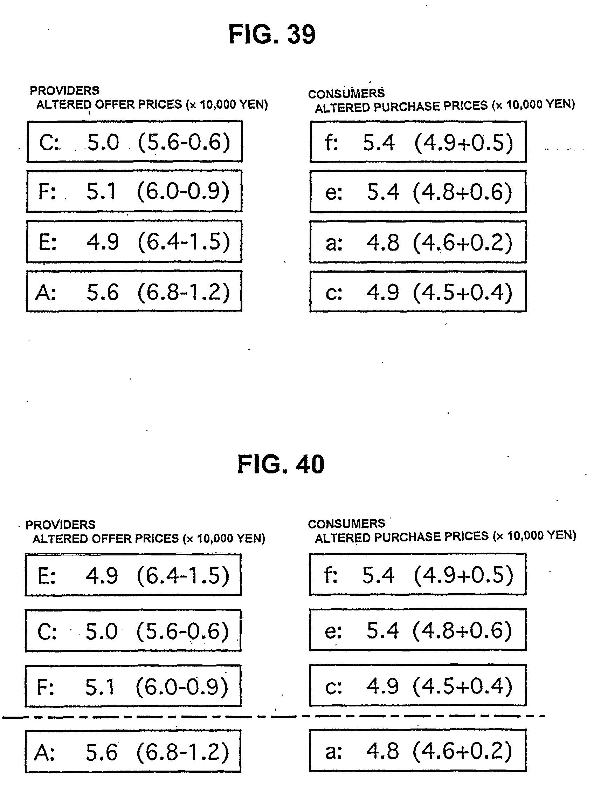

Then, when the respective providers X and consumers Y alter the offer prices and purchase prices on the basis of the disclosed information, the altered offer prices and purchase prices are received by the altering means 183 (step S1045 in Figure 38). Figure 39 shows the altered offer prices and purchase prices received for each provider X and consumer Y. The numerical expressions shown in parentheses are the formulae that were used by the respective parties to add to or subtract from the initially submitted price at the time of alteration in order to calculate the altered price. Accordingly, the altered prices are not limited to monetary amounts showing compromise according to the respective disclosed differences.

Then, the respective condition data sets that include these altered prices are rearranged by the rearranging means 141 as shown in Figure 40 according to the same rules as those used in the above-described first modification (step S102 in Figure 26), and re-matching is performed by the re-matching means 190 using these altered offer prices and purchase prices (step S103 through step S106 in Figure 26). The procedure of this re-matching is the same as in the above-described third embodiment; accordingly, a description is omitted here. However, to show only the results using Figure 40, matching was successfully completed for the offer condition data (E, C, F) and purchase condition data (f, e, c) up to the third row, and matching was not successfully completed in the fourth row (A and a).

Furthermore, as described above, the information disclosed to the providers X and consumers Y that were not successfully matched, and the processing required for this information, are not limited to the information and processing described in the third embodiment and modifications 1 through 3 of this embodiment; modifications other than those described above are possible within limits that involve no departure from the spirit of the present invention.

### <Fourth Embodiment>

The fourth embodiment of the present invention will be described below with reference to the accompanying drawings.

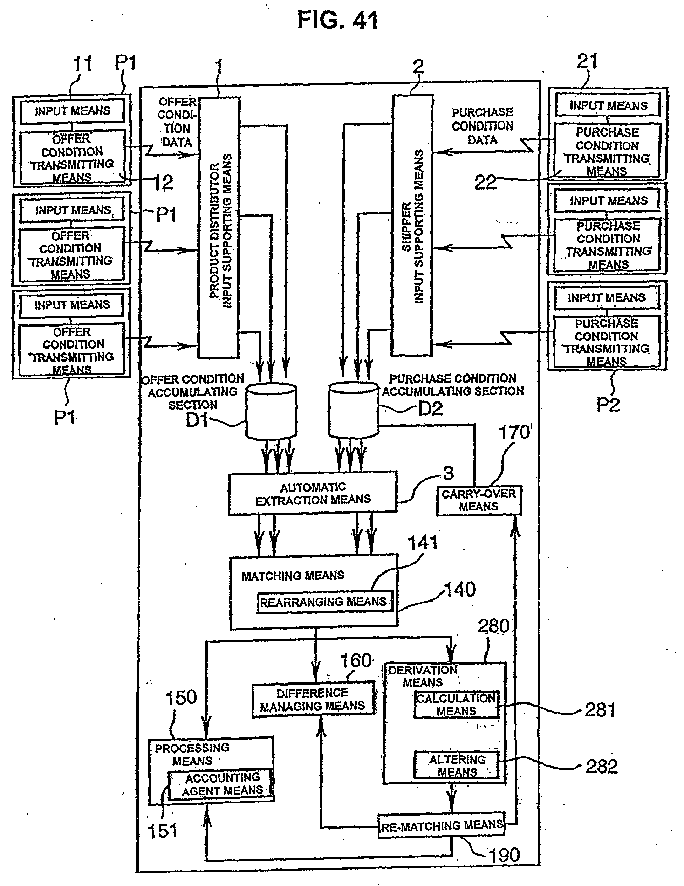

The transaction supporting facility in this embodiment is used to support and promote general commercial transactions. As shown in Figure 41, the concrete constructions and functions, etc., of the respective elements such as the terminal computers P1 and P2 that are respectively installed on the side of the providers X and the side of the consumers Y, and the server computer SRV that forms the computer system, etc., are the same as in the above-described third embodiment; accordingly, a description is omitted here. However, the present embodiment differs from the third embodiment in that the offer prices and purchase prices submitted by the providers X and consumers Y have some leeway, and also differs from the third embodiment in regard to the accompanying procedure that is performed until matching is successful or unsuccessful. Accordingly, these points will be described in detail.

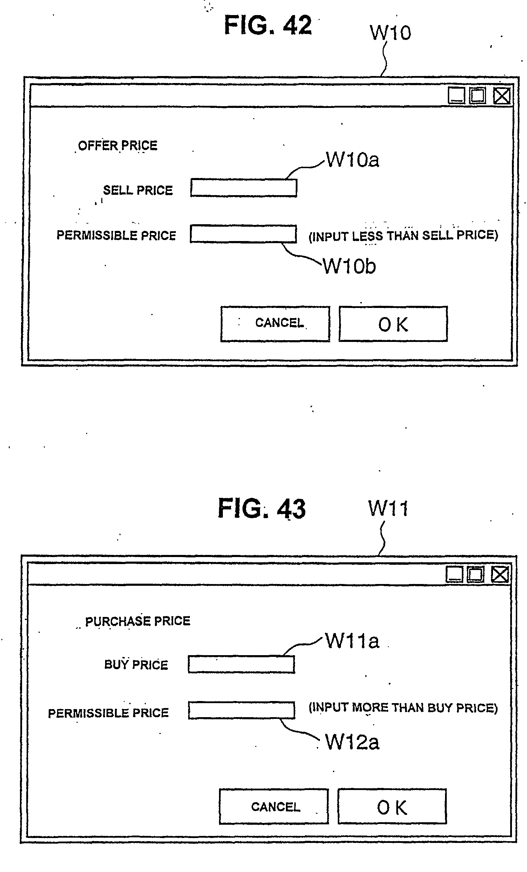

First, when a provider X logs in from his own terminal computer P1 and makes an entry, a offer condition input window W10 such as that shown in Figure 42 is displayed on the screen of this computer. Furthermore, this offer condition input window W10 may be devised so that various types of conditions such as the desired deadline for determination, etc., shown in Figure 12 can be inputted; however, such features are omitted from Figure 42. In the case of the present embodiment, the offer prices are constructed from a sell price which is the preferential desired offer price, and a permissible price which is the price at which the provider X in question can complete a transaction in cases where a transaction cannot be completed at the sell price. Ordinarily, since providers X desire to complete a transaction at a higher price, the system is arranged so that the permissible price is lower than the sell price. Accordingly, a sell price input frame W10a and a permissible price input frame W10b are set in the offer condition input window W10. Here, the system is arranged so that only the lower limit price is inputted as the permissible price; however, in a case where, for example, the sell price is 30,000 yen, it would also be possible to set the permissible price as a price that has a specified leeway of 20,000 yen to 10,000 yen, thus arranging the system so that monetary amounts that are far removed from the sell price can be inputted. When a provider X clicks on the OK button at the lower right of the same screen after inputting entries into these respective frames, this data is transmitted to the server computer SRV as offer condition data together with other conditions, and the data is stored in the offer condition accumulating section D1 in association with this provider X.

Meanwhile, when a consumer Y logs in from his own terminal computer P2 and makes an entry, a purchase condition input window W11 of the type shown in Figure 43 is displayed on the screen of this computer. Furthermore, input frames for various conditions such as the desired deadline for determination, etc. shown in Figure 2 are also omitted from the Figure in the case of this purchase condition input window W11. In the case of the present embodiment, the purchase prices are also constructed from a buy price which is the preferential desired purchase price, and a permissible price which is the price at which the consumer Y in question can complete a transaction in cases where a transaction cannot be completed at the buy price. Ordinarily, since consumers Y desire to complete a transaction at a lower price, the system is arranged so that the permissible price is higher than the buy price. Accordingly, a buy price input frame W11a and a permissible price input frame W11b are set in the purchase condition input window W11, and when the OK button at the lower right of the same screen is clicked on by the consumer Y, the prices inputted into these respective frames are transmitted to the server computer SRV as purchase condition data together with other conditions, and this data is stored in the purchase condition accumulating section D2 in association with this consumer Y.

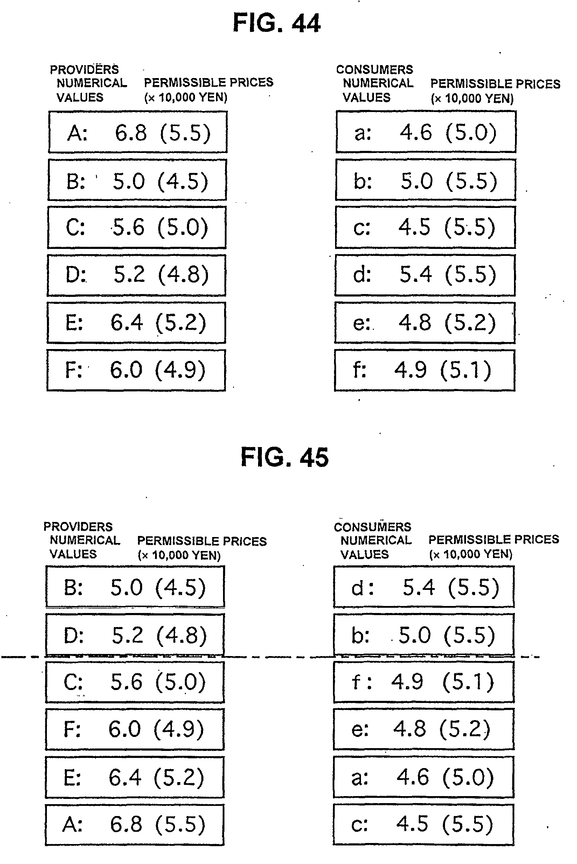

Here, as one example to facilitate understanding, a case in which offer condition data and purchase condition data have been entered by numerous providers X and consumers Y for a personal computer (not shown) constituting the commercial product in question, and six sets of offer condition data A, B, C, D, E and F and six sets of purchase condition data a, b, c, d, e and f have been respectively extracted by the automatic extraction means 3 as shown in Figure 44 will be described below with reference to Figures 41 through 47. These respective condition data sets include offer prices and purchase prices consisting of buy/sell prices and permissible prices (in Figure 44; values in parentheses). However, in order to simplify the description, these buy/sell prices are set at the same prices as the offer prices and purchase prices initially submitted in the example described in the above-described third embodiment (see Figure 27). Furthermore, the basic processing flow up to the successful completion of matching in the present embodiment is the same as that in the above-described third embodiment; accordingly, this will be briefly described with reference to Figure 26 as well.

When the specified limit time is reached, the above-described respective condition data sets are rearranged as shown in Figure 45 by the rearranging means 141 in the matching means 140 utilizing the submitted buy/sell prices, and matching is successfully completed (step S101 through step S106 in Figure 26) from the beginning row up to the second row (providers B and D and consumers b and d); furthermore, processing used to complete the transactions is performed by the processing means (step S108 in Figure 26). For the respective condition data sets (see Figure 28) from the third row on that could not be successfully matched (step S106 in Figure 26; N), combination re-formation information that is used to combine these data sets is derived by the derivation means 280 (step S107 in Figure 26).

For this purpose, the derivation means 280 in the present embodiment is equipped with a calculation means 281 and an altering means 282.

Like the calculation means 181 in the above-described third embodiment, the calculation means 281 calculates the average value of the offer prices (average offer price) and average value of the purchase prices (average purchase price) for the respective offer condition data sets and purchase condition data sets that could not be successfully matched in the matching means 140. Furthermore, the altering means 282 is a means which alters the calculated results or the permissible prices submitted by the providers X and consumers Y into the object of matching by the re-matching means on the basis of the calculated results produced by the calculating means 281. Alternatively, it would also be possible to devise the altering means 282 so that prices determined by specified calculation formulae, etc., on the basis of the above-described calculated results, prices determined on the basis of calculation formulae, etc., using the above-described calculated results and the offer prices or purchase prices that could not be matched as parameters, or the above-described permissible prices, are used as the object of matching by the above-described re-matching means; however, a description of such cases is omitted here.

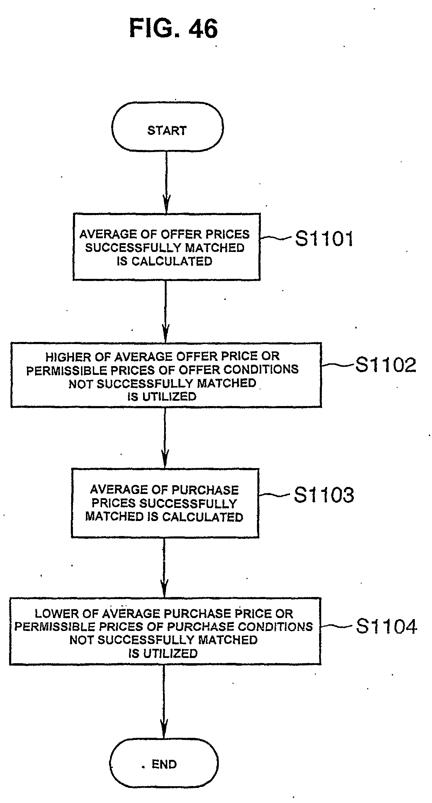

To describe this in concrete terms, first, as shown in Figure 46, the average (51,000 yen) of the offer prices that were successfully matched in the above-described matching means 140 is calculated by the calculation means 181 (step S1101 in Figure 46). This calculated average offer price and the submitted permissible prices are compared, and in each case, whichever of the prices is higher is taken by the altering means 282 as the object of matching by the re-matching means 190 (step S1102 in Figure 46). Meanwhile, the average (52,000 yen) of the purchase prices that were successfully matched is calculated by the calculation means 281 (step S1103 in Figure 46); this calculated average purchase price and the submitted permissible prices are compared, and in each case, whichever of the prices is higher is taken by the altering means 282 as the object of matching by the re-matching means 190 (step S1104 in Figure 46). Furthermore, these procedures are not limited to the procedures described above, as long as the calculation and alteration of the respective average prices are performed in this order.

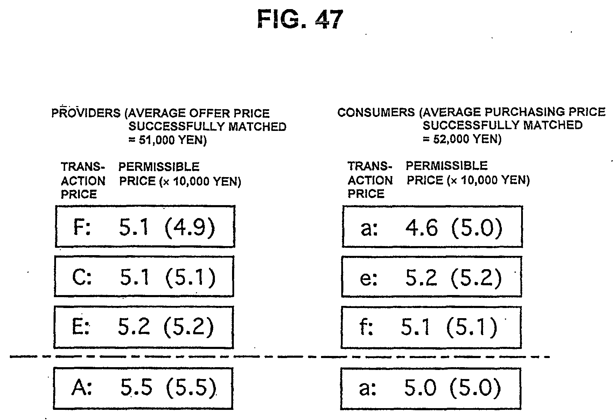

Here, the permissible prices of the respective providers X and consumers Y that could not be successfully matched will be examined in concrete terms (Figures 44, 45 and 47). On the side of the providers X, there are some cases in which the permissible price is higher than the above-described average offer price (51,000 yen), and other cases in which the permissible price is lower than the average offer price. Furthermore, there may also be cases in which the permissible price and the average offer price are the same, although this eventuality is not covered in the present example. Accordingly, in the altering means 282, the permissible prices and the average offer price are compared, and whichever of the prices is higher is taken as the object of the re-matching means 190. For example, since the permissible price (50,000 yen) submitted by C is lower than the average offer price, the average offer price is taken as the transaction price (Figure 47) for re-matching in the case of this C. On the other hand, since the permissible price (55,000 yen) submitted by A is higher than the average offer price, the permissible price is taken as the transaction price (Figure 47) for re-matching in the case of this A. The reason for this is as follows: specifically, in the case of a provider X who entered as the permissible price an advance compromise price lower than that of providers submitting the average offer price that was successfully matched by the matching means 140, the successful completion of re-matching is allowed at the average value of the offer prices that were previously successfully matched even if the price is not lowered to the low compromise price. On the other hand, in the case of a provider X who entered a permissible price indicating that the completion of a transaction is desired only at a price higher than that of providers submitting offer prices that were successfully matched, an attempt is made to accomplish re-matching at the desired price within the permissible range. As a result, in cases where the transaction prices are rearranged in order from the lowest prices as described later, providers using the average offer price as the transaction price will always precede providers using the permissible price as the transaction price, so that the possibility of successful re-matching is increased, and so that there will be no disadvantage resulting from the indication of a lower permissible price.

Meanwhile, on the side of the consumers Y, there are some cases in which the permissible price is the same as the above-described average purchase price (52,000 yen), and some cases in which the permissible price is higher or lower than this average purchase price. Accordingly, in the altering means 282, the permissible prices are compared with the average purchase price, and whichever of the prices is higher is taken as the object of the re-matching means 190. For example, the permissible price (55,000 yen) submitted by c is higher than the average offer ; accordingly, the average purchase price is taken as the transaction price (Figure 47) for re-matching in the case of this c. On the other hand, the permissible price (50,000 yen) submitted by a is higher than the average purchase price; accordingly, the permissible price is taken as the transaction price (Figure 47) for re-matching in the case of this a. In the case of e, the permissible price and the average purchase price are the same; accordingly, either price may be used. The reason for this is as follows: specifically, in the case of a consumer Y who entered as the permissible price an advance compromise price higher than that of consumers submitting the average purchase price that was successfully matched by the matching means 140, the successful completion of re-matching is allowed at the average value of the purchase prices that were previously successfully matched even if the price is not raised to the high compromise price. On the other hand, in the case of a consumer Y who entered a permissible price indicating that the completion of a transaction is desired only at a price lower than that of consumers submitting purchase prices that were successfully matched, an attempt is made to accomplish re-matching at the desired price within the permissible range. As a result, in cases where the transaction prices are rearranged in order from the lowest prices as described later, consumers using the average purchase price as the transaction price will always precede consumers using the permissible price as the transaction price, so that the possibility of successful re-matching is increased, and so that there will be no disadvantage resulting from the indication of a higher permissible price.

Furthermore, these respective condition data sets are rearranged in order as shown in Figure 47 by the rearranging means of the re-matching means 190, so that the data set including the lowest transaction price is listed first in the case of offer condition data, and so that the data set including the highest transaction price is listed first in the case of purchase condition data (step S102 in Figure 26). Furthermore, in the present embodiment, in cases where a plurality of offer condition data sets or purchase condition data sets show the same transaction price (e.g., F and C, c and e), preference is given on the side of the providers X to the data set showing the lowest permissible price, and preference is given on the side of the consumers Y to the data set showing the highest permissible price. Furthermore, in regard to the order of preference of the data sets, various other methods such as listing the data sets in the order of earliest entry or alteration, etc., are also conceivable as in the above-described third embodiment.

Furthermore, the respective condition data sets that have been rearranged are re-matched by performing the re-matching process (step S103 through step S106) shown in Figure 26, which is similar to that of the matching means 140. Accordingly, as shown in Figure 47, re-matching is successfully completed up to the third row (providers F, C and E, and consumers c, e and f), in which the total transaction price on the side of the purchase prices is higher than the total transaction price on the side of the offer prices (or else the prices are the same), and processing for the purpose of completing transactions is performed (step S108 in Figure 26). Meanwhile, in the case of A and a, in which matching was not successfully completed even by the re-matching means 190, it is considered that the completion of a transaction was ultimately unsuccessful in the matching preformed in the present entry, and these condition data sets are added by the carry-over means 170 to the next object of extraction by the automatic extraction means 3, as long as this is permitted by the desired deadline for the determination of matching in the condition data. Furthermore, this limitation doe not apply in cases where the number of times that matching is performed by the matching means 140 and re-matching means 190 is set at three or more times.

Thus, in the present embodiment, the system is devised so that the offer prices and purchase prices have a certain leeway, and buy/sell prices and permissible prices are initially entered. Accordingly, even in the case of condition data sets that could not be combined in the initial matching using the buy/sell prices, there is a high possibility that these condition data sets will be combined in the re-matching utilizing the permissible prices, without any additional input of desired transaction prices. Accordingly, the "quick completion of matching", which is one of the main objects of the present invention, can be realized. Furthermore, in such a method, as in the case of the third embodiment, there may be instances in which matching is completed even in cases where unreasonable permissible prices have been submitted. Accordingly if all or part of the algorithms used up to the completion of matching are disclosed in advance, the participation of parties submitting unfair prices can be excluded, so that the completion of transactions that are satisfactory to both sides can be expected by the participation of well-intentioned providers X and consumers Y who submit fairer prices.

Furthermore, in the present embodiment as well, the system is devised so that consumers Y and providers X can ascertain their transaction partners after a transaction has been completed, but cannot ascertain the prices submitted by their transaction partners. Moreover, the system is devised so that when consumers Y and providers X input purchase prices or offer prices, or altered amounts of these prices, these consumers and providers cannot ascertain individual information relating to the conditions submitted by other consumers Y and other providers X. Thus, the use of a double-closed auction system in which providers X and consumers Y can ascertain only partners that have completed a transaction is the same as in the first and second embodiments, and other constructions of the first, second and third embodiments may also be applied.

Furthermore, in the present embodiment, the concrete processing performed in the derivation means 280 is not limited to the configuration described above, and may be altered in various ways. As concrete examples, Modifications 1 through 3 of the present embodiment will be briefly described below. Furthermore, in these respective modifications, the procedures other than the derivation procedure (Figure 26) for combination re-formation information performed by the derivation means 280, and the constructions of the respective elements (Figure 41), are the same as in the fourth embodiment described above; accordingly, a description is omitted. Furthermore, in the following descriptions, the respective condition data sets including the offer prices and purchase prices consisting of buy/sell prices and permissible prices initially submitted by the providers X and consumers Y are the same as those shown in Figures 44 and 45.

### <<First Modification>>

This modification is devised so that in the case of providers X and consumers Y that could not be successfully matched by the matching means 140, re-matching is accomplished at a price that is close to the lowest offer price among the offer condition data, and highest purchase price among the purchase condition data, that were successfully matched using permissible prices.

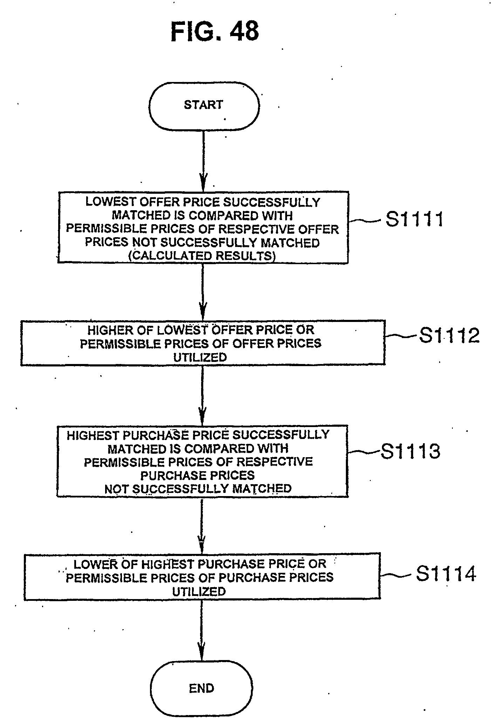

In the present embodiment, first, as shown in Figure 48, the lowest offer price (50,000 yen; see Figure 45) that was successfully matched by the matching means 140, and the permissible prices included in the respective offer prices that could not be successfully matched, are compared (step S111 in Figure 48). Then, in each case, whichever of the above-described prices is higher, i.e., the above-described lowest offer price or permissible price, is taken by the altering means 282 as the transaction price for re-matching (step S1112 in Figure 48). Meanwhile, the highest purchase price (54,000 yen; see Figure 45) that was successfully matched, and the permissible prices included in the respective purchase prices that could not be successfully matched, are compared (step S1113 in Figure 38), and whichever of the above-described prices is lower, i.e., the above-described highest purchase price or permissible price, is taken by the altering means 282 as the transaction price for re-matching (step S1114 in Figure 48).

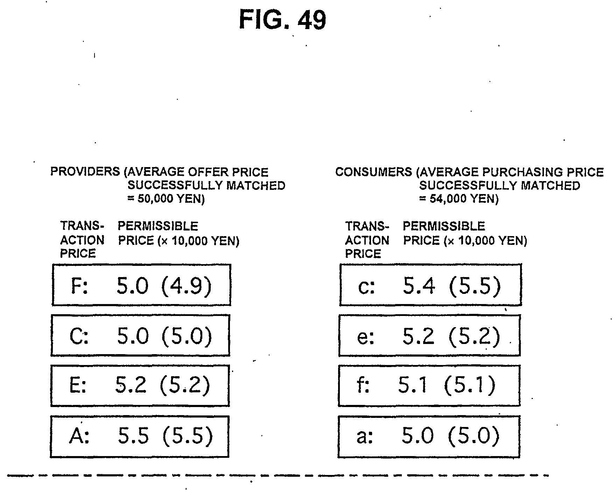

As shown in concrete terms for example in Figure 49, the permissible price (49,000 yen) submitted by F on the side of the providers X is lower than the average offer price (50,000 yen); accordingly, the average offer price is taken as the transaction price for re-matching in the case of this F. On the other hand, the permissible price (52,000 yen) submitted by E is higher than the average offer price; accordingly, the permissible price is taken as the transaction price for re-matching in the case of this E. Furthermore, for example, the permissible price (55,000 yen) submitted by c is higher than the average offer price (54,000 yen); accordingly, the average purchase price is taken as the transaction price for re-matching in the case of this c. On the other hand, the permissible price (50,000 yen) submitted by a is higher than the average purchase price; accordingly, the permissible price is taken as the transaction price for re-matching in the case of this a. Thus, the handling of the lowest offer price and permissible prices, and the handling of the highest purchase price and permissible prices, are roughly the same as in the above-described fourth embodiment.

Furthermore, Figure 49 shows the results obtained when the transaction prices altered and set by the altering means 282 are rearranged by the rearranging means 141. The numerical expressions in parentheses indicate the permissible prices initially submitted by the respective parties. Furthermore, when re-matching is performed by the re-matching means 190 (step S103 through step S106 in Figure 26) using these rearranged offer prices and purchase prices, the total transaction price on the side of the providers X and the total transaction price on the side of the consumers Y, each consisting of four data sets, are the same; accordingly, matching is successfully accomplished in this re-matching stage for all of these data.

Furthermore, in this modification and in the above-described fourth embodiment, it would also be possible to forcibly use the permissible prices as transaction prices in this re-matching without comparing the submitted permissible prices and the offer prices and purchase prices that were successfully matched, or the average values of these prices.

### <<Second Modification>>

This modification is devised so that in the case of offer condition data and purchase condition data that were not successfully matched by the matching means 140 (step S106 in Figure 26; N), re-matching is accomplished utilizing either the difference in the total amounts of the respective prices, or the permissible prices that were initially inputted at the time of entry.

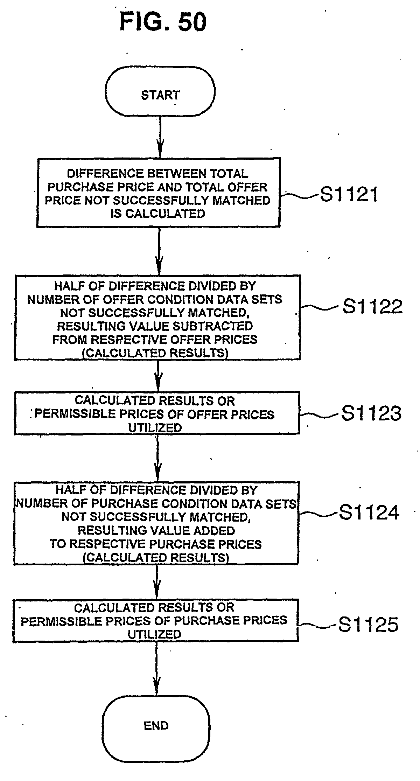

First, as shown in Figure 50, the difference between the total offer price and the total purchase price is calculated by the calculation means 181 (step S1121 in Figure 50). Next, in order to insure a fair distribution of this difference among the providers X and consumers Y that could not be successfully matched, half of the above-described difference is divided by the number of providers, this value is subtracted from the respective offer prices that could not be successfully matched, and the results are taken as the calculated results (step S1122 in Figure 50). Furthermore, these calculated results are compared with the permissible prices included in the respective offer prices, and one or the other of these values is taken by the altering means 282 as the object of re-matching. Meanwhile, an amount obtained by dividing half of the above-described difference by the number of consumers is calculated, this value is added to the respective purchase prices that could not be successfully matched, and the results are taken as the calculated results (step S1124 in Figure 50). Furthermore, these calculated results are compared with the permissible prices included in the respective purchase prices, and one or the other of these values is taken by the altering means 282 as the object of re-matching. Here, since it would be thought that providers X who submitted lower permissible prices and consumers Y who submitted higher permissible prices desire the completion of matching as quickly as possible, it is desirable that the permissible prices be taken as the transaction prices rather than the above-described calculated results, in order to give priority to the successful re-matching of these parties. Furthermore, as long as the transaction price does not fall below the lowest offer price or exceed the highest purchase price among the prices that could not be successfully matched, and is within the range of the permissible prices submitted by the respective parties, this transaction price is not limited to this second modification, but may be freely set in order to maximize the number of successful re-matchings.

### <<Third Modification>>

This modification is also devised so that in the case of offer condition data and purchase condition data that could not be successfully matched by the matching means 140 (step S106 in Figure 26; N), re-matching is accomplished by utilizing prices weighted in accordance with the prices initially submitted by the respective parties using the difference between the total amounts of the respective prices, or utilizing the permissible prices submitted by these parties.

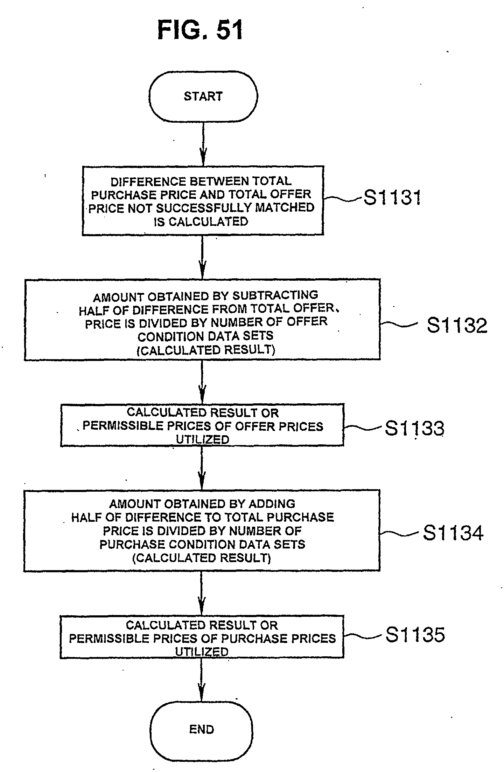

First, as shown in Figure 51, the difference between the total offer price and the total purchase price is calculated by the calculation means 181 (S1131 in Figure 51). Next, in order to distribute this difference fairly among the providers X and consumers Y that could not be successfully matched, half of the above-described difference is subtracted by the calculation means 281 from the total offer price of the offer condition data that could not be successfully matched, and an amount obtained by dividing this amount by the number of providers is taken as the calculated result (step S1132 in Figure 51). Furthermore, this calculated result is compared with the permissible prices included in the respective offer prices, and one or the other of these values is taken in each case by the altering means 282 as the object of re-matching. Meanwhile, half of the above-described difference is added to the total of the respective purchase prices that could not be successfully matched, and an amount obtained by dividing this value by the number of consumers is taken as the calculated result (step S1124 in Figure 51). Furthermore, this calculated result is compared with the permissible prices included in the respective purchase prices, and one or the other of these values is taken in each case by the altering means 282 as the object of re-matching.

In the case of this modification, as in the case of the above-described second modification, it would be thought that providers X who submitted lower permissible prices and consumers Y who submitted higher permissible prices desire the completion of matching as quickly as possible; accordingly, it is desirable that the permissible prices be taken as the transaction prices rather than the above-described calculated results, in order to give priority to the successful re-matching of these parties. Furthermore, as long as the transaction price does not fall below the lowest offer price or exceed the highest purchase price among the prices that could not be successfully matched, and is within the range of the permissible prices submitted by the respective parties, this transaction price is not limited to this second modification, but may be freely set in order to maximize the number of successful re-matchings.

Furthermore, the present invention is not limited to the above-described embodiments. For example, it would also be possible to accept prices that have a specified leeway as offer conditions and purchase conditions. Furthermore, in such cases, the system may be devised so that the matching means compares these offer condition data sets and purchase condition data sets, and combines providers and consumers so that at least the lowest amount of the purchase prices is the same as or higher than the highest amount of the offer prices.

Furthermore, it is also possible to devise the system so that the purchase price obtained by totaling the respective purchase condition data sets that are to be matched in the same matching step is the same as or higher than the offer price obtained by totaling the respective offer condition data sets.

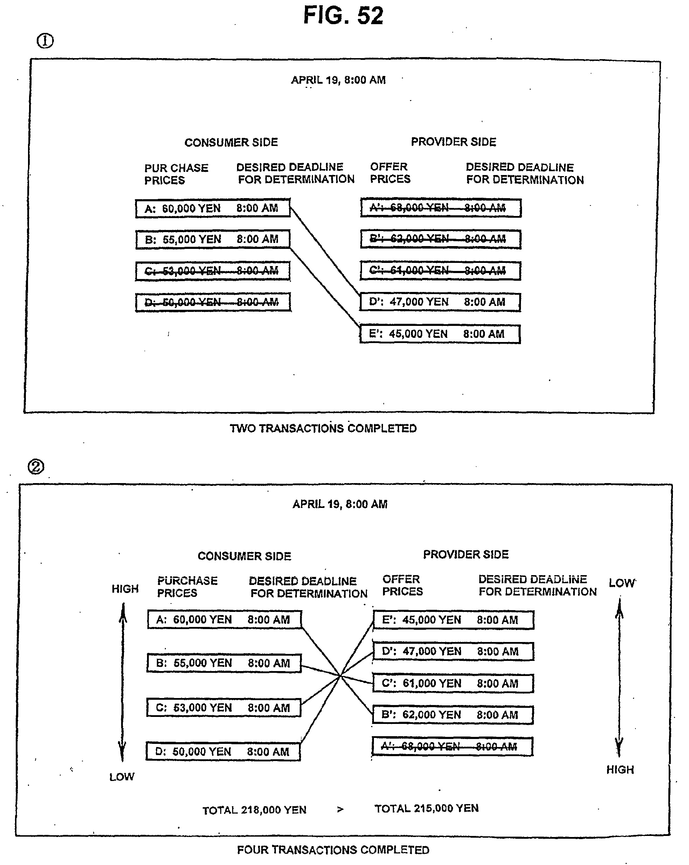

In concrete terms, a case in which four purchase condition data sets A, B, C and D and five offer condition data sets A', B', C', D' and E' have been entered as shown in Figure 52 will be considered.

First, in a case where matching is performed by the matching method of the above-described second embodiment, as shown in Figure 52 (1), two transactions, i.e., C and D', and D and E' (other combinations are also possible), are completed in order to prevent the offer price from exceeding the purchase price for each matched purchase condition data set and offer condition data set.

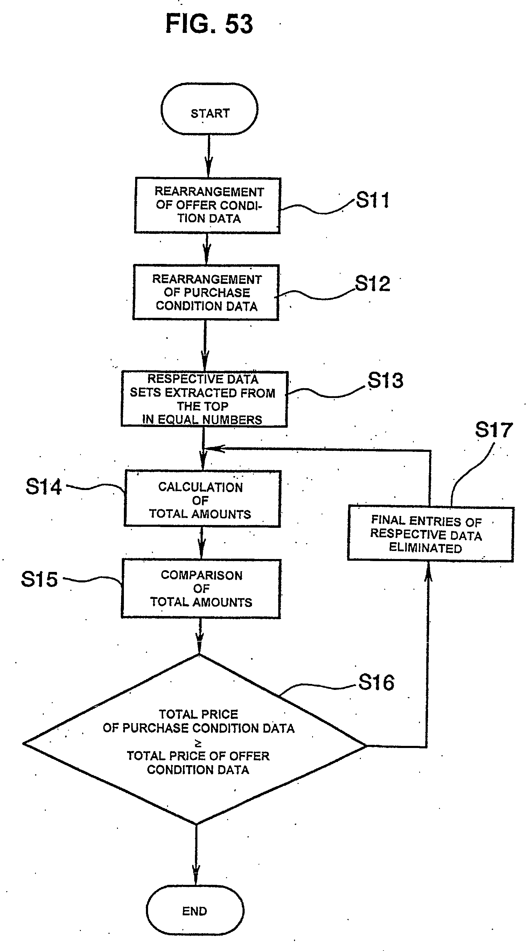

Next, a case in which the method of the present modification is applied will be considered. First, the offer condition data sets A', B', C', D' and E' are rearranged in order from the lowest offer price (this corresponds to the first rearranging means, step S11 in Figure 53). Meanwhile, the purchase condition data sets A, B, C and D are rearranged in order from the highest purchase price (this corresponds to the second rearranging means, step S12 in Figure 53).

Then, as many of these rearranged condition data sets as possible are extracted in equal numbers from the top (step S13 in Figure 53), and the total prices extracted are respectively calculated (this corresponds to the calculation means, step S14 in Figure 53). In this case, since the purchase condition data sets consist of the four data sets A, B, C and D, four data sets are extracted. In the case of the offer condition data sets, A', which submitted the highest price, is excluded. Then, these total prices are compared (step S15 in Figure 53), and processing is completed if the purchase price obtained by totaling the respective purchase condition data sets that are to be matched is the same as or higher than the offer price obtained by totaling the respective offer condition data sets. Here, in cases where the above-described conditions are not satisfied, the offer condition data showing the highest price among the respective data sets and the purchase condition data showing the lowest prices among the respective data sets are excluded (step S17 in Figure 53), and the same procedure is repeated until the remaining data sets satisfy the above-described conditions.

In the present example, as shown in Figure 52 (2), at the point in time at which the first four data sets are extracted and compared, the purchase price obtained by totaling the purchase condition data sets A through D that are to be matched is 218,000 yen, and the offer price obtained by totaling the offer condition data sets B' through E' that are to be matched is 215,000 yen, so that the condition requiring that the purchase price obtained by totaling the respective purchase condition data sets that are to be matched be the same as or higher than the offer price obtained by totaling the respective offer condition data sets is satisfied.

Accordingly, these offer condition data sets B', C', D' and E' and purchase condition data sets A, B, C and D are successfully matched.

Furthermore, in regard to the question of which offer condition data sets are to be connected with which purchase condition data sets, various combinations are conceivable; in the present embodiment, however, four transactions combining the data sets A and B', B and C', C and D' and D and E' are completed. Here, the reason for connecting data sets showing higher purchase prices with data sets showing higher offer prices is as follows: specifically, since it would be thought that parties submitting higher prices are inherently guaranteeing or seeking higher quality, such an approach would appear to make it possible to avoid trouble or a feeling of unfairness, etc., to the maximum extent possible. Furthermore, it goes without saying that various other methods of combination such as connecting parties submitting higher purchase prices with parties submitting lower offer prices, etc., are also conceivable.

In addition, for example, it would also be possible to arrange the purchase condition data and offer condition data in the order of higher purchase prices and offer prices, respectively, and to connect these data sets in order from the top, as long as the total amount of the purchase prices is the same as or greater than the total amount of the offer prices.

Accordingly, in the case of such a configuration, more transactions can be completed; furthermore, since the matching algorithm is extremely simple, the speed of matching can be further increased, so that such a configuration is more desirable for both consumers and providers. Furthermore, an independent matching supporting device which has the above-described first rearranging means, second rearranging means and calculation means may also be installed.

In addition, if this approach is expanded, and the system is devised so that the purchase price obtained by totaling the respective purchase condition data sets that are to be matched in the matching step over a plurality of matchings is the same as or higher than the offer price obtained by totaling the respective offer condition data sets, this is desirable in terms of increasing the number of completed transactions.

Furthermore, in the case of such a modification, it is conceivable that the providers X involved in the offer condition data sets B' and C' that show offer prices that are higher than the purchase prices might obtain an advantage over other providers X. Accordingly, in the case of such providers, it is possible to add points that are associated with the providers, and to assign some type of handicap, e.g., a lower priority in matching, in subsequent entries. Of course, the same is true of the consumers Y. Furthermore, it would also be possible to devise the system so that limits are placed on the differences, and so that the completion of matching is not recognized in the case of providers who submit unfairly high prices or consumers who submit unfairly low prices, even if the above-described conditions for the completion of matching are satisfied.

Furthermore, the present invention is not limited to the above-described examples shown in the drawings; and various alterations are possible within limits that involve no departure from the spirit of the present invention.

### Industrial Applicability

In the present invention, as described above, the conventional concept in conventional bidding systems or auction systems that a transaction can only be completed when the prices of the buyer and seller agree (of course, there may be some cases in which a fixed broker's fee is taken) is completely overturned. In addition to the simultaneous completion of individual transactions for goods or services involving the participation of a plurality of providers and a plurality of consumers, the present invention allows the completion of transactions even when the prices submitted by the providers and consumers disagree. Accordingly, there is a prospect for the completion of numerous transactions, so that the difficulty and rarity of the completion of transactions, which are the drawbacks of conventional auction systems, etc., are overcome. Furthermore, transactions can be completed at the prices desired by both consumers and providers, and, for example, there is no need for consumers to access individual shops in a cyber-mall, and conversely no need for providers to appeal to individual accessing parties by mail, etc. Accordingly, the present invention offers convenience and ease of use. In addition, buying and selling information concerning the above-described goods and services is concentrated in one location, so that this information can be analyzed and effectively applied to business trends, etc.

In particular, if the present invention is used in the field of product distribution, the absolute condition that "goods must always be shipped" can be reliably satisfied, since there is a prospect for the completion of a large number of transactions, and since the number of product distributors is actually larger. Moreover, excessive competition arising from rarity, which is another drawback of auction systems, is alleviated by the fact that numerous transactions are completed simultaneously.

Furthermore, since product distributors complete transactions at the shipping offer prices that they themselves have submitted, and since shippers also complete transactions at the purchase prices that they themselves have submitted, the product distributors and shippers do not have any residual feelings of dissatisfaction.

Furthermore, since prices are submitted from both sides, and mutual transaction partners are automatically determined by a matching means, existing individual contract type product distribution can be eliminated. Specifically, there is a shift from the conventional shipping price setting system controlled by shippers to an on-demand type price setting system in which the prices are set by product distributors; accordingly, a sound open market in which there are no master contractor type product distribution firms can be realized.

In addition, since all product distribution business transacted via the present facility can easily be converted into data and analyzed, travel distances, travel times, travel expenditures, fuel expenditures and environmental impact values, etc., can easily be calculated for individual vehicles as information for respective product distributors. Accordingly, document control, etc., based on ISO standards can also be accomplished at the same time.

## Claims

1. A transaction supporting facility for supporting transactions on each of a plurality of goods or services between providers who desire to provide said goods or services and consumers who desire to purchase said goods or services, comprising:
a matching means which matches providers and consumers who have submitted offer prices and purchase prices for respective goods or services even in cases where the offer prices submitted by the providers and the purchase prices submitted by the consumers disagree; and
a processing means which performs processing that completes transactions between the matched consumers and providers at prices that satisfy the price conditions submitted by said consumers and providers.

2. The transaction supporting facility according to Claim 1, wherein said matching means matches providers and consumers so that the difference obtained by subtracting the total amount of the offer prices from the total amount of the purchase prices for one or a plurality of goods or services is 0 or a positive number.

3. The transaction supporting facility according to Claim 1, wherein
a fee request processing means is provided that performs processing which requests a fee from at least either the providers or consumers that have been successfully matched; and
said matching means matches providers and consumers so that the difference obtained by subtracting the total amount of the offer prices and the total amount of said fees from the total amount of the purchase prices for one or a plurality of goods or services is 0 or a positive number.

4. The transaction supporting facility according to Claims 1 through 3, wherein offer prices and purchase prices submitted by providers and consumers are disclosed only to the providers and consumers who submitted said prices.

5. The transaction supporting facility according to Claims 1 through 3, wherein said matching means matches providers and consumers so that the number of matchings completed is maximized.

6. The transaction supporting facility according to Claim 2 or 3, wherein said matching means matches providers and consumers so that the difference in prices is maximized.

7. The transaction supporting facility according to Claim 2 or 3, wherein a fee request processing means is provided that requests a fee from at least either the providers or consumers that have been successfully matched, and said matching means matches providers and consumers so that the sum of said fee and difference in prices is maximized.

8. The transaction supporting facility according to Claims 1 through 3, wherein said matching means matches providers and consumers so that the total amount of the purchase prices and offer prices is maximized.

9. A transaction supporting facility comprising:
a offer condition receiving means which receives data relating to offer conditions for goods or services, including offer prices for said goods or services, from providers, and which accumulates said offer condition data in a specified offer condition accumulating section in association with said providers;
a purchase condition receiving means which receives data relating to purchase conditions including purchase prices for said goods or services from consumers, and which accumulates said purchase condition data in a specified purchase condition accumulating section in association with said consumers; and
a matching means which compares a plurality of offer condition data sets and a plurality of purchase condition data sets that have been accumulated, and which matches all or part of the plurality of offer condition data sets and all or part of the plurality of purchase condition data sets regardless of whether the offer prices and purchase prices agree or disagree.

10. An information processing device equipped with a offer condition transmitting means that transmits offer condition data to the offer condition receiving means of Claim 9.

11. The information processing device according to Claim 10, wherein offer condition data is inputted according to a specified format displayed on a screen, and in which said specified format is determined according to the type of goods or services involved.

12. An information processing device equipped with a purchase condition transmitting means that transmits purchase condition data to the purchase condition receiving means of Claim 9.

13. The information processing device according to Claim 12, wherein purchase condition data is inputted according to a specified format displayed on a screen, and in which said specified format is determined according to the type of goods or services involved.

14. A transaction supporting facility for supporting, via a computer system, commercial transactions between a plurality of providers who provide goods or services and a plurality of consumers who receive said goods and services, comprising:
a provider input supporting means which receives offer conditions including offer prices for specified goods or services, and which stores said offer conditions as offer condition data in a specified offer condition accumulating section in association with the providers who submitted said offer conditions;
a consumer input supporting means which receives purchase conditions including purchase prices for said specified goods or services, and which stores said purchase conditions as purchase condition data in a specified purchase condition accumulating section in association with the consumers who submitted said purchase conditions;
a matching means which compares the offer condition data and purchase condition data stored in said respective accumulating sections, and which combines the offer condition data and purchase condition data so that the offer prices and purchase prices are at least the same, or so that the purchase prices are higher than the offer prices;
a buying and selling supporting means which provides a support so that the buying and selling of said specified goods or services are accomplished between the providers and consumers involved in the offer condition data and purchase condition data whose combinations have been determined by said matching means, in accordance with the offer prices and purchase prices submitted by the respective providers and consumers; and
a difference managing means which manages the differences between the purchase prices and offer prices generated by the buying and selling transacted utilizing said buying and selling supporting means.

15. A transaction supporting facility for supporting, via a computer system, commercial transactions between a plurality of providers who provide goods or services and a plurality of consumers who receive said goods and services, comprising:
a provider input supporting means which receives offer conditions including offer prices that have a certain leeway for specified goods or services, and which stores said offer conditions as offer condition data in a specified offer condition accumulating section in association with the providers who submitted said offer conditions;
a consumer input supporting means which receives purchase conditions including purchase prices that have a certain leeway for specified goods or services, and which stores said purchase conditions as purchase condition data in a specified purchase condition accumulating section in association with the consumers who submitted said purchase conditions;
a matching means which compares the offer condition data and purchase condition data stored in said respective accumulating sections, and which combines the offer condition data and purchase condition data so that the lowest amounts of the purchase prices are at least the same as or higher than the highest amounts of the offer prices;
a buying and selling supporting means which provides a support so that the buying and selling of said specified goods or services are accomplished between the providers and consumers involved in the offer condition data and purchase condition data whose combinations have been determined by said matching means, in accordance with prices that are in the range of the offer prices and purchase prices submitted by the providers and consumers; and
a difference managing means which manages the differences between the purchase prices and offer prices generated by the buying and selling transacted utilizing said buying and selling supporting means.

16. The transaction supporting facility according to Claim 14 or 15, wherein
said provider input supporting means receives offer conditions that include a desired period for the determination of matching;
said consumer input supporting means receives purchase conditions that include a desired period for the determination of matching with respect to said goods or services;
an automatic extraction means is provided which extracts data indicating the desired period for the determination of matching, including the date and time of determination, from said offer condition data and purchase condition data at a predetermined date and time of determination; and
the offer condition data and purchase condition data extracted by said automatic extraction means are taken as an object of matching by said matching means.

17. The transaction supporting facility according to Claim 16, wherein a plurality of said dates and times of determination are intermittently set.

18. The transaction supporting facility according to Claim 16 or 17, wherein a carry-over means is provided that automatically re-adds offer condition data and purchase condition data for which matching was not determined by said matching means to an object of extraction by said automatic extraction means until the desired period for the determination of matching has elapsed.

19. The transaction supporting facility according to Claims 14 through 18, wherein the offer prices included in the respective offer condition data sets and the purchase prices included in the respective purchase condition data sets are disclosed only to the providers and purchasers who submitted said prices.

20. The transaction supporting facility according to Claim 19, wherein said matching means is equipped with a combination method setting means which sets a method to combine the offer condition data and purchase condition data in accordance with a specified preferential order in cases where there are a plurality of methods of combining this data.

21. A transaction supporting facility for supporting commercial transactions between a plurality of providers who provide goods or services and a plurality of consumers who received said goods or services, comprising:
a matching means which compares offer condition data including offer prices received from providers for specified goods or service and purchase condition data including purchase prices received from consumers for said goods or services, and which combines at least some of the offer condition data and purchase condition data so that the total offer price and the total purchase price are the same, or so that the total purchase price is higher than the total offer price;
a processing means which completes transactions between the providers and consumers involved in the offer condition data and purchase condition data whose combinations have been determined by said matching means, in accordance with the offer prices and purchase prices submitted by said respective providers and consumers; and
a derivation means which derives combination re-formation information that re-forms combinations in which the total offer price and total purchase price are the same or in which the total purchase price is higher than the total offer price, for offer condition data and purchase condition data that could not be matched by the matching means.

22. The transaction supporting facility according to Claim 21, wherein said combination re-formation information suggests the monetary reasons why matching could not be accomplished.

23. The transaction supporting facility according to Claim 22, wherein said derivation means includes a calculation means which calculates at least either the average offer price in the offer condition data that could be successfully matched by said matching means or the average purchase price in the purchase condition data that could be successfully matched by said matching means, as said information that suggests monetary reasons.

24. The transaction supporting facility according to Claim 22, wherein said derivation means includes a calculation means which calculates the difference between the total offer price of the offer condition data and the total purchase price of the purchase condition data that could not be successfully matched by said matching means as said information that suggests monetary reasons.

25. The transaction supporting facility according to Claim 22, wherein said derivation means includes a calculation means which calculates at least the differences between some value between the lowest offer price and highest offer price in the offer condition data that was successfully matched by said matching means and the offer prices in the offer condition data that could not be successfully matched, or the differences between the highest or lowest purchase price in the purchase condition data that was successfully matched by said matching means and the purchase prices in the purchase condition data that could not be successfully matched, as said information that suggests monetary reasons.

26. The transaction supporting facility according to Claims 23 through 25, wherein the derivation means includes a disclosure means which discloses the calculated results produced by the calculation means, or values determined by specified calculation formulae or tables from said calculated results, only to the providers or consumers who submitted offer prices or purchase prices that could not be matched.

27. The transaction supporting facility according to Claims 23 through 25, wherein said derivation means includes a disclosure means which discloses the calculated results produced by the calculation means, and offer prices or purchase prices to be altered which are determined on the basis of calculation formulae or tables using the offer prices or purchase prices that could not be matched as parameters, only to the providers or consumers who submitted offer prices or purchase prices that could not be matched.

28. The transaction supporting facility according to Claim 24, wherein said derivation means includes a disclosure means which discloses a value obtained by dividing the difference constituting the calculated result produced by the calculation means, or a monetary amount which is greater than this difference, by the number of offer condition data sets, number of purchase condition data sets or total number of both types of condition data sets, only to the providers or consumers who submitted said offer prices or purchase prices.

29. The transaction supporting facility according to Claims 22 through 28, wherein
said derivation means includes an altering means which alters the contents of the offer condition data or purchase condition data in accordance with the altered offer prices or purchase prices that are received in cases where alterations of such offer prices or purchase prices made on the basis of said information suggesting monetary reasons are received from providers or consumers corresponding to offer condition data or purchase condition data for which said matching could not be successfully completed; and
a re-matching means is provided which again compares said offer prices and purchase prices on the basis of the offer prices or purchase prices altered by said altering means, and which combines at least some of the offer condition data and purchase condition data so that the total offer price and total purchase price are the same, or so that the total purchase price is higher than the total offer price.

30. The transaction supporting facility according to Claim 21, wherein
the offer prices and purchase prices that include, in advance, buy/sell prices indicative of the preferential transaction prices, and permissible prices indicative of a range of prices that allow a transaction to be completed;
the matching means compares the offer prices and purchase prices and combines the offer condition data and purchase condition data using said buy/sell prices in a preferential manner; and
the combination re-formation information that is derived by the derivation means is information that is used to perform re-matching using said permissible prices for offer condition data and purchase condition data that could not be matched.

31. The transaction supporting facility according to Claim 30, wherein a re-matching means is provided which compares the offer condition data and purchase condition data that could not be matched within ranges of said permissible prices on the basis of said combination re-formation information, and which again combines the offer condition data and purchase condition data so that total offer price and total purchase price of said data are the same, or so that total purchase price is higher than the total offer price.

32. The transaction supporting facility according to Claim 31, wherein said derivation means includes:
a calculation means which calculates at least either the average offer price in the offer condition data that was successfully matched by said matching means, or the average purchase price in the purchase condition data that was successfully matched; and
an altering means which changes the calculated results produced by the calculation means, prices determined by specified calculation formulae or tables on the basis of the calculated results, prices determined on the basis of specified calculation formulae or tables using the calculated results and the offer prices or purchase prices that could not be matched as parameters, or said permissible prices, to an object of matching by said re-matching means.

33. The transaction supporting facility according to Claim 31, wherein said derivation means includes:
a calculation means which calculates the differences between the total offer prices of the offer condition data and total purchase price of the purchase condition data that could not be successfully matched by said matching means, and
an altering means which changes the calculated results produced by the calculation means, prices determined by specified calculation formulae or tables on the basis of the calculated results, prices determined on the basis of specified calculation formulae or tables using the calculated results and the offer prices or purchase prices that could not be matched as parameters, or said permissible prices, to an object of matching by said re-matching means.

34. The transaction supporting facility according to Claim 31, wherein said derivation means includes:
a calculation means which calculates at least the differences between some value between the lowest offer price and highest offer price in the offer condition data that was successfully matched by said matching means and the offer prices in the offer condition data that could not be successfully matched, or the differences between the highest or lowest purchase price in the purchase condition data that was successfully matched by said matching means and the purchase prices in the purchase condition data that could not be successfully matched; and
an altering means which changes the calculated results produced by the calculation means, prices determined by specified calculation formulae or tables on the basis of the calculated results, prices determined on the basis of specified calculation formulae or tables using the calculated results and the offer prices or purchase prices that could not be matched as parameters, or said permissible prices, to an object of matching by said re-matching means.

35. A transaction supporting facility for supporting, via a computer system, transactions concerning shipping of freight which are completed between a plurality of product distributors constituting providers of freight shipping services and a plurality of shippers constituting consumers of said freight shipping services, comprising:
a product distributor input supporting means which receives shipping offer conditions including shipping prices, and which stores said offer conditions as offer condition data in a memory means in association with product distributors who submitted said offer conditions;
a shipper input supporting means which receives purchase conditions including purchase prices, and which stores said purchase conditions as purchase condition data in a memory means in association with shippers show submitted said purchase conditions;
an automatic extraction means which extracts data that satisfies the shipping conditions for at least the shipping services specified by the shipping conditions excluding the price, from the offer condition data and purchase condition data stored in said memory means;
a matching means which compares the offer condition data and purchase condition data extracted by said automatic extraction means, and which combines said data so that the offer prices and purchase prices are at least the same, or so that the purchase prices are higher than the offer prices;
a buying and selling supporting means which provides support so that transactions concerning said shipping services are completed between the product distributors and shippers involved in the offer condition data and purchase condition data for which combinations were determined by said matching means, in accordance with the offer prices and purchase prices submitted by said respective product distributors and shippers; and
a difference managing means which manages the differences between the purchase prices and offer prices that may be generated by the buying and selling accomplished utilizing said buying and selling supporting means.

36. The transaction supporting facility according to Claim 35, wherein:
said product distributor input supporting means is a means which receives desired periods for the determination of matching that are desired by the product distributors, and adds said data to said offer condition data;
said shipper input supporting means is a means which receives desired periods for the determination of matching that are desired by the shippers, and adds said data to said purchase condition data; and
said automatic extraction means is a means which extracts, at the predetermined data and time of determination, offer condition data and purchase condition data that satisfy said shipping conditions, and that have desired periods for the determination of matching that include said predetermined date and time of determination.

37. The transaction supporting facility according to Claim 36, wherein a plurality of said dates and times of determination are set intermittently.

38. The transaction supporting facility according to Claim 36 or 37, wherein a carry-over means is provided which automatically re-adds offer condition data and purchase condition data for which combinations could not be determined by said matching means to the object of extraction by said automatic extraction means until a desired period for the determination of matching has elapsed.

39. The transaction supporting facility according to Claim 35 through 38, wherein the offer prices included in the respective offer condition data sets and the purchase prices included in the respective purchase condition data sets are disclosed only to the product distributors and shippers who submitted said prices.

40. The transaction supporting facility according to Claim 35 through Claim 39, wherein said matching means is equipped with a combination method setting means which sets a method of combination of the offer condition data and purchase condition data in accordance with a specified preferential order in cases where there are a plurality of methods of combining this data.

41. The transaction supporting facility according to Claim 40, wherein said combination method setting means is a means which sets the method of combination of the offer condition data and purchase condition data with priority given to maximizing the number of combinations of offer condition data and purchase condition data.

42. The transaction supporting facility according to Claim 40, wherein said combination method setting means sets the method of combination of the offer condition data and purchase condition data with priority given to maximizing the differences between the purchase prices and offer prices generated by the combination of the offer condition data and purchase condition data.

43. The transaction supporting facility according to Claim 40, wherein said combination method setting means sets the method of combination of the offer condition data and purchase condition data with priority given to maximizing the total amount of the purchase prices and offer prices generated by the combination of the offer condition data and purchase condition data.

44. The transaction supporting facility according to Claims 35 through 43, wherein a fuzzy search means is provided which, as a result of a specified request signal inputted by the operation of product distributors or shippers, outputs information relating to all or part of the conditions of transaction partners that do not satisfy the offer conditions or purchase conditions submitted by said product distributors or shippers, but that are within a specified range.

45. The transaction supporting facility according to Claim 44, wherein
said offer condition data and purchase condition data include at least the shipping point and destination as requisite conditions; and
said fuzzy search means outputs information relating to all or part of the conditions of transaction partners, which include as requisite conditions shipping points and destinations located within a range that is within a specified distance from regions connecting said shipping point and destination, or that can be reached from said regions within a specified time.

46. The transaction supporting facility according to Claim 45, wherein a registration means is provided that registers product distributors and shippers, so that only product distributors and shippers registered by said registration means can utilize said facility.

47. The transaction supporting facility according to Claim 46, wherein said buying and selling supporting means is equipped with an accounting agent means which confirms from product distributors or shippers that shipping services have been performed or definitely will be performed, and then automatically performs accounting as an agent for both shippers and product distributors with respect to said shipping services.

48. A matching supporting device for supporting transactions between providers who desire to provide goods or services and consumers who wish to purchase said goods or services, comprising:
a first rearranging means which rearranges offer condition data including offer prices submitted by a plurality of providers in a specified order;
a second rearranging means which rearranges purchase condition data including purchase prices submitted by a plurality of consumers in a specified order; and
a calculation means which calculates, respectively for the offer condition data and purchase condition data, the total prices in a case where equal numbers of the respective rearranged condition data sets are extracted from the top of each list.

49. The matching supporting device according to Claim 48, wherein said first rearranging means rearranges the offer condition data in order from the lowest offer price, and said second rearranging means rearranges the purchase condition data in order from the highest purchase price.

50. A transaction supporting method for supporting transactions relating to respective goods or services between providers who wish to provide said goods or services and consumers who wish to purchase said goods or services, comprising:
a matching step for matching providers and consumers who have submitted offer prices and purchase prices for the respective goods or services even in cases where the offer prices submitted by the providers and the purchase prices submitted by the consumers are disagree; and
a transaction completion processing step for completing transactions between the matched consumers and providers at prices that satisfy the price conditions submitted by said consumers and providers.

51. A transaction supporting method comprising:
a offer condition receiving step for receiving data relating to offer conditions including offer prices of goods or services for said goods or services from providers, and accumulating said offer condition data in association with said providers;
a purchase condition receiving step for receiving data relating to purchase conditions including purchase prices of said goods or services from consumers, and accumulating said purchase condition data in association with said consumers; and
a matching step for comparing a plurality of offer condition data sets and a plurality of purchase condition data sets thus accumulated, and matching all or part of said plurality of offer condition data sets and all or part of said plurality of purchase condition data sets regardless of whether the offer prices and purchase prices agree or disagree.

52. A transaction supporting method for supporting commercial transactions between a plurality of providers who provide goods or services and a plurality of consumers who receive said goods or services, comprising:
a offer condition receiving step for receiving offer conditions including offer prices for specified goods or services, and storing said offer conditions in memory as offer condition data in association with the providers who submitted said offer conditions;
a purchase condition receiving step for receiving purchase conditions including purchase prices for said specified goods or services, and storing said purchase conditions in memory as purchase condition data in association with the consumers who submitted said purchase conditions;
a matching step for comparing said stored offer condition data and purchase condition data, and matching the offer condition data and purchase condition data so that the offer prices and purchase prices are at least the same, or so that the purchase prices are higher than the offer prices;
a buying and selling supporting step for providing a support so that the buying and selling of said specified goods or services are accomplished between the providers and consumers involved in the offer condition data and purchase condition data whose combinations were determined by the matching step, in accordance with the offer prices and purchase prices respectively submitted by said providers and consumers; and
a difference management step for managing the differences between the purchase prices and offer prices that are generated by the buying and selling performed on the basis of said buying and selling supporting step.

53. A transaction supporting method for supporting commercial transactions completed between a plurality of providers who provide goods or services and a plurality of consumers who receive said goods or services, comprising:
a matching step for comparing offer condition data including offer prices received from providers for specified goods or services and purchase condition data including purchase prices received from consumers for said specified goods or services, and for combining at least a part of the offer condition data and a part of the purchase condition data so that the total offer price and total purchase price are the same, or so that the total purchase price is higher than the total offer price;
a processing step for executing processing to complete transactions between the providers and consumers involved in the offer condition data and purchase condition data for which combinations were determined by said matching step, in accordance with the offer prices and purchase prices submitted by said respective providers and consumers; and
a derivation step for deriving combination re-formation information which re-forms combinations for the offer condition data and purchase condition data that could not be matched in the matching step, so that the total offer price and total purchase price are the same, or so that the total purchase price is higher than the total offer price.

54. A transaction supporting method for supporting transactions relating to freight shipping that are completed between a plurality of product distributors constituting providers of freight shipping services and a plurality of shippers constituting consumers of freight shipping services, comprising:
a product distributor offer condition receiving step for receiving shipping offer conditions including shipping prices, and storing said offer conditions in memory as offer condition data in association with the product distributors who submitted said offer conditions;
a shipper purchase condition receiving step for receiving purchase conditions including purchase prices, and storing said purchase conditions in memory as purchase condition data in association with the shippers who submitted said purchase conditions;
an extraction step for extracting data that satisfies the shipping conditions from said stored offer condition data and purchase condition data for at least the shipping services specified by the shipping conditions excluding the prices;
a matching step for comparing the offer condition data and purchase condition data extracted by the extraction step, and combining said data so that the offer prices and purchase prices are at least the same, or so that the purchase prices are higher than the offer prices;
a buying and selling supporting step for providing a support so that transactions relating to said shipping services are completed between the product distributors and shippers involved in the offer condition data and purchase condition data for which combinations were determined by said matching step, in accordance with the offer prices and purchase prices respectively submitted by said product distributors and shippers; and
a difference management step for managing the differences between the purchase prices and offer prices that may be generated by the buying and selling performed on the basis of said buying and selling supporting step.

55. A matching supporting method for supporting transactions regarding goods or services between providers who wish to provide said goods or services and consumers who wish to purchase said goods or services, comprising:
a first rearrangement step for rearranging offer condition data including offer prices submitted by a plurality of providers in a specified order;
a second rearrangement step for rearranging purchase condition data including purchase prices submitted by a plurality of consumers in a specified order; and
a calculation step for respectively calculating the total prices in a case in which the respective condition data sets rearranged are extracted in equal numbers from the top of each list for the offer condition data and purchase condition data.
